(19) Europäisches Patentamt
European Patent Office
Office européen des brevets

(11) EP 2 480 629 B1

(12) EUROPÄISCHE PATENTSCHRIFT

(45) Veröffentlichungstag und Bekanntmachung des Hinweises auf die Patenterteilung:
**10.09.2014 Patentblatt 2014/37**

(21) Anmeldenummer: **10757731.4**

(22) Anmeldetag: **14.09.2010**

(51) Int Cl.:
***C09K 19/18*** *(2006.01)* ***C09K 19/30*** *(2006.01)*

(86) Internationale Anmeldenummer:
**PCT/EP2010/005640**

(87) Internationale Veröffentlichungsnummer:
**WO 2011/035863 (31.03.2011 Gazette 2011/13)**

# (54) BAUTEILE FÜR DIE HOCHFREQUENZTECHNIK UND FLÜSSIGKRISTALLINE MEDIEN

COMPONENTS FOR HIGH-FREQUENCY TECHNOLOGY AND LIQUID CRYSTAL MEDIA

ELEMENTS POUR LA TECHNIQUE HAUTE FREQUENCE ET MILIEUX DE CRISTAUX LIQUIDES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.09.2009 DE 102009042728**
**04.11.2009 DE 102009051892**

(43) Veröffentlichungstag der Anmeldung:
**01.08.2012 Patentblatt 2012/31**

(73) Patentinhaber: **Merck Patent GmbH**
**64293 Darmstadt (DE)**

(72) Erfinder:
- **MANABE, Atsutaka**
  **64625 Bensheim (DE)**
- **GOEBEL, Mark**
  **64293 Darmstadt (DE)**
- **KLASS, Dagmar**
  **64291 Darmstadt (DE)**
- **MONTENEGRO, Elvira**
  **69469 Weinheim (DE)**
- **PAULUTH, Detlef**
  **64372 Ober-Ramstadt (DE)**

(56) Entgegenhaltungen:
**DE-A1- 10 120 024** **DE-A1- 19 907 941**
**DE-A1-102004 029 429** **US-A- 5 759 443**

- **WU SHIN-TSON ET AL: "High birefringence and wide nematic range bis-tolane liquid crystals", APPLIED PHYSICS LETTERS, AIP, AMERICAN INSTITUTE OF PHYSICS, MELVILLE, NY, US, Bd. 74, Nr. 3, 18. Januar 1999 (1999-01-18), Seiten 344-346, XP012023047, ISSN: 0003-6951, DOI: DOI:10.1063/1.123066 in der Anmeldung erwähnt**
- **HSU C S ET AL: "SYNTHESIS OF LATERALLY SUBSTITUTED BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 27, Nr. 2, 1. Februar 2000 (2000-02-01), Seiten 283-287, XP000932257, ISSN: 0267-8292, DOI: DOI: 10.1080/026782900203100 in der Anmeldung erwähnt**
- **ZHENLIN ZHANGA ET AL: "Synthesis and properties of highly birefringent liquid crystalline materials: 2,5-bis(5-alkyl-2-butadinylthiophene-yl) styrene monomers", LIQUID CRYSTALS: AN INTERNATIONAL JOURNAL OF SCIENCE AND TECHNOLOGY, TAYLOR & FRANCIS, GB, Bd. 37, Nr. 1, 1. Januar 2010 (2010-01-01) , Seiten 69-76, XP001553170, ISSN: 0267-8292, DOI: DOI: 10.1080/02678290903370272**
- **TSAI W-L ET AL: "MESOGENIC PROPERTIES OF CYCLOALKYLMETHYL 4-(4'-OCTOXYBIPHENYL-4-CARBO NYLOXY) BENZOATE", LIQUID CRYSTALS: AN INTERNATIONAL JOURNAL OF SCIENCE AND TECHNOLOGY, TAYLOR & FRANCIS, GB, Bd. 31, Nr. 2, 1. Februar 2004 (2004-02-01), Seite 299/300, XP001047715, ISSN: 0267-8292, DOI: DOI: 10.1080/02678290410001648688**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 480 629 B1

## Beschreibung

Gebiet der Erfindung

Die vorliegende Erfindung betrifft neue Bauteile für die Hochfrequenztechnik, speziell Bauteile für Hochfrequenzvorrichtungen, insbesondere Antennen, speziell für den Gigahertzbereich, die im Mikrowellen- oder im Millimeterwellenbereich betrieben werden. Diese Bauteile verwenden besondere flüssigkristalline, chemische Verbindungen oder damit zusammengestellte flüssigkristalline Medien beispielsweise zur Phasenschiebung von Mikrowellen für abstimmbare "phased-array" Antennen oder für abstimmbare Zellen von Mikrowellenantennen basierend auf "reflect arrays".

Stand der Technik und zu lösendes Problem

Flüssigkristalline Medien werden seit längerem in elektrooptischen Anzeigen (Liquid Crystal Displays - LCDs) genutzt, um Informationen anzuzeigen.

Bistolanverbindungen, auch Triphenyldiacetylene genannt, mit einer zusätzlichen Alkylsubstitution am zentralen Phenylenring sind dem Fachmann hinlänglich bekannt.

Z.B. Wu, S.-T., Hsu, C.-S. and Shyu, K.-F., Appl. Phys. Lett., 74 (3), (1999), Seiten 344 - 346 offenbart verschiedene flüssigkristalline Bistolanverbindungen mit einer lateralen Methylgruppe der Formel

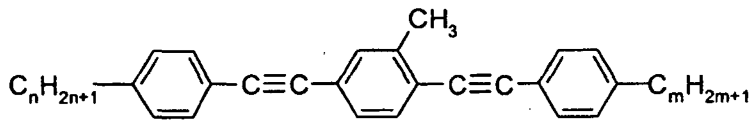

Hsu, C. S. Shyu, K. F., Chuang, Y. Y. and Wu, S.-T., Liq. Cryst., 27 (2), (2000), Seiten 283 - 287 offenbart, neben solchen flüssigkristallinen Bistolanverbindungen mit einer lateralen Methylgruppe, auch entsprechende Verbindungen mit einer lateralen Ethylgruppe und schlägt deren Verwendung u. a. in "liquid crystal optically phased arrays" vor.

In Dabrowski, R., Kula, P. Gauza, S., Dziadiszek, J. Urban, S. und Wu, S.-T., IDRC 08, (2008), Seiten 35 - 38 werden dielektrisch neutrale Bistolanverbindungen mit und ohne lateraler Methylgruppe am mittleren Ring neben den stark dielektrisch positiven Isithiocyanatbistolanverbindungen der Formel

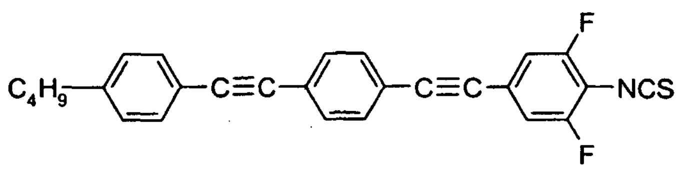

erwähnt.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A) beschrieben.

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich. Somit lassen sich abstimmbare Antennen konstruieren, die keine beweglichen Teile beinhalten (A. Gaebler, A. Moessinger, F. Goelden, et al., "Liquid Crystal-Reconfigurable Antenna Concepts for Space Applications at Microwave and Millimeter Waves", International Journal of Antennas and Propagation, Band 2009, Artikel ID 876989, (2009), Seiten 1 - 7, doi:10.1155/2009/876989.

A. Penirschke, S. Müller, P. Scheele, C. Weil, M. Wittek, C. Hock und R. Jakoby: "Cavity Perturbation Method for Characterization of Liquid Crystals up to 35 GHz", 34th European Microwave Conference - Amsterdam, S. 545 - 548, beschreibt unter anderem die Eigenschaften der bekannten, flüssigkristallinen Einzelsubstanz K15 (Merck KGaA, Deutschland) bei einer Frequenz von 9 GHz.

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

A. Gaebler, F. Goelden, S. Müller, A. Penirschke und R. Jakoby "Direct Simulation of Material Permittivites using an Eigen-Susceptibility Formulation of the Vector Variational Approach", 12MTC 2009 - International Instrumentation and Measurement Technology Conference, Singapur, 2009 (IEEE), S. 463-467 beschreibt die entsprechenden Eigenschaften der bekannten Flüssigkristallmischung E7 (ebenfalls Merck KGaA, Deutschland).

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht. Außerdem werden dort flüssigkristalline Medien, die Verbindungen der Formeln

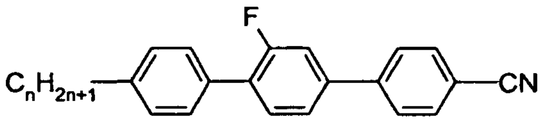

neben Verbindungen der Formeln

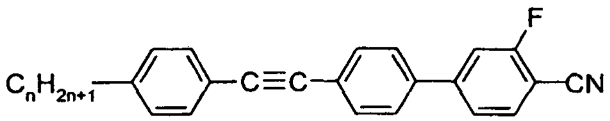

und

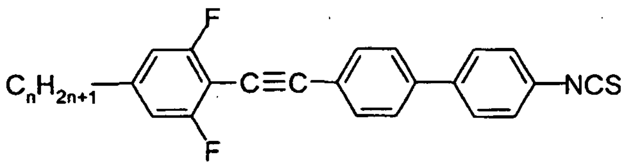

enthalten, erwähnt.

DE 101 20 024 A1 und DE 199 07 941 A1 offenbaren neben sehr vielen anderen, ähnlichen Verbindungen, solche der Formel

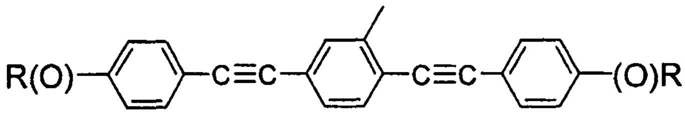

z.B.

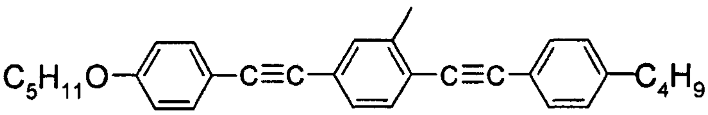

und DE 101 20 024 A1 zusätzlich auch

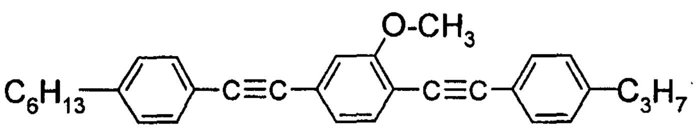

und deren Verwendung in Flüssigkristallmischungen.

Zhenglin Zhanga et al.: "Synthesis and properties of highly birefringent liquid crystalline materials: 2,5 bis (5-alkyl-2-butadünylthiophene-yl) styrene monomers", Liquid Crystals, Bd. 37, Nr. 1, (2010), Seiten 69-76 offenbart die Verbindung

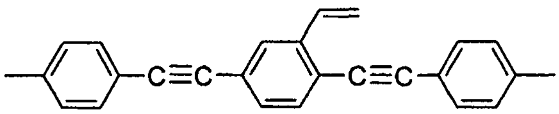

I

als Vergleichsverbindung für die Titelverbindungen.

Tsai, W.-L. et al.: "Mesogenic properties of Cycloalkylmethyl 4-(4'-octoxybiphenyl-4-carbonyloxy)benzoate", Liquid Crystals, Bd. 31, Nr. 2, (2004), Seite 299-300 offenbart Ester von Cycloalkylmethanol und deren flüssigkristalline Phasen.

US 5,759,443 A offenbart Cyclopentenylderivate als Bestandteile flüssigkristalliner Mischungen.

Die bisher bekannten Zusammensetzungen sind jedoch mit gravierenden Nachteilen behaftet. Die meisten von ihnen führen, neben anderen Mängeln, zu unvorteilhaft hohen Verlusten und/oder unzureichenden Phasenverschiebungen bzw. zu geringer Materialgüte (η).

Somit sind neue flüssigkristalline Medien mit verbesserten Eigenschaften erforderlich. Insbesondere müssen der Verlust im Mikrowellenbereich verringert und die Materialgüte verbessert werden.

Außerdem besteht der Bedarf das Tieftemperaturverhalten der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Vorliegende Erfindung

Überraschenderweise wurde nun gefunden, dass Bauteile für die Hochfrequenztechnik realisiert werden können, welche die Nachteile der Materialien des Standes der Technik nicht oder zumindest nur in erheblich geringerem Maße aufweisen, wenn ausgewählte, flüssigkristalline Verbindungen oder diese Verbindungen enthaltende Medien eingesetzt werden.

Gegenstand der vorliegenden Erfindung ist somit ein Bauteil für die Hochfrequenztechnik, bzw. für den Mikrowellenbereich und/oder den Millimeterbereich des elektromagnetischen Spektrums, ausgewählt aus der Gruppe der folgenden Bauteile: Funk-, Radiowellenantennenarrays und Mikrowellenantennenarrays oder Bauelement für die Hochfrequenztechnik, bzw. für den Mikrowellenbereich und Millimeterwellenbereich des elektromagnetischen Spektrums ausgewählt aus der Gruppe der folgenden Bauelemente: Phasenschieber, Varaktoren und "matching circuit adaptive filters", dadurch gekennzeichnet, dass es eine Flüssigkristallverbindung der Formel I enthält oder, dass es ein Flüssigkristallmedium enthält, das eine oder mehrere Verbindungen der Formel I enthält,

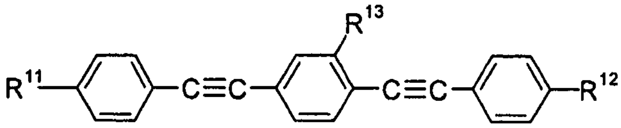

I

worin

$R^{11}$ bis $R^{13}$unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkycycloalkylalkyl oder Alkycycloalkenylalkyl) jeweils mit bis zu 15 C-Atomen,

bevorzugt $R^{11}$ und $R^{12}$unabhängig voneinander unfluoriertes Alkyl oder unfluoriertes Alkoxy jeweils mit 1 bis 7 C-Atomen oder unfluoriertes Alkenyl, unfluoriertes Alkenyloxy oder unfluoriertes Alkoxyalkyl jeweils mit 2 bis 7 C-Atomen,

besonders bevorzugt $R^{11}$unfluoriertes Alkyl mit 1 bis 7 C-Atomen oder unfluoriertes Alkenyl, unfluoriertes Alkenyloxy oder unfluoriertes Alkoxyalkyl jeweils mit 2 bis 7 C-Atomen, und

besonders bevorzugt $R^{12}$unfluoriertes Alkyl oder unfluoriertes Alkoxy jeweils mit 1 bis 7 C-Atomen, und

bevorzugt $R^{13}$unfluoriertes Alkyl mit 1 bis 5 C-Atomen, unfluoriertes Cycloalkyl oder Cycloalkenyl mit 3 bis 7 C-Atomen, , unfluoriertes Alkylcyclohexyl oder unfluoriertes Cyclohexylalkyl jeweils mit 4 bis 12 C-Atomen oder unfluoriertes Alkylcyclohexylalkyl mit 5 bis 15 C-Atomen, besonders bevorzugt Cyclopropyl, Cyclobutyl oder Cyclohexyl und ganz besonders bevorzugt n-Alkyl, besonders bevorzugt Methyl, Ethyl oder n-Propyl,
bedeuten.

In einer ersten bevorzugten Ausführungsform der vorliegenden Erfindung enthält das Bauteil für die Hochfrequenztechnik eine Flüssigkristallverbindung der Formel I oder eine flüssigkristalline Mischung aus zwei oder mehreren Verbindung der Formel I.

In dem Fall, dass das Bauteil für die Hochfrequenztechnik eine einzelne Flüssigkristallverbindung der Formel I enthält bedeutet in dieser Formel bevorzugt

$R^{11}$ und $R^{12}$ unabhängig voneinander unfluoriertes Alkyl mit 1 bis 7 C-Atomen oder unfluoriertes Alkoxy mit 1 bis 6 C-Atomen,

$R^{13}$ Methyl, Ethyl oder n-Propyl, besonders bevorzugt Ethyl, und

insbesondere bevorzugt einer von

$R^{11}$ und $R^{12}$ Alkyl und der andere Alkyl oder Alkoxy

bedeutet und ganz besonders bevorzugt $R^{11}$ und $R^{12}$ voneinander verschiedene Bedeutungen haben.

In dem Fall, dass das Bauteil für die Hochfrequenztechnik eine flüssigkristalline Mischung aus Verbindung der Formel I enthält, besteht diese Mischung aus zwei, drei, vier oder mehr Verbindungen der Formel I, für die jeweils bevorzugt die Bedingungen für die einzelnen Parameter gelten, die in dem vorhergehend beschriebenen Fall gegeben wurden.

Gemäß einer weiteren bevorzugten Ausführungsform der vorliegenden Erfindung enthält das Bauteil für die Hochfrequenztechnik ein flüssigkristallines Medium, enthaltend

- eine erste Komponente, Komponente A, die aus einer oder mehreren Verbindungen der oben gegebenen Formel I besteht und

- eine oder mehrere weitere Komponenten ausgewählt aus der Gruppe der im Folgenden definierten Komponenten B bis E:

  - einer stark dielektrisch positiven Komponente, Komponente B, die eine dielektrische Anisotropie von 10,0 oder mehr aufweist,

  - einer stark dielektrisch negativen Komponente, Komponente C, die eine dielektrische Anisotropie von -5,0 oder weniger aufweist,

  - einer weiteren Komponente, Komponente D, die eine dielektrische Anisotropie im Bereich von mehr als -5,0 und von weniger als 10,0 aufweist und aus Verbindungen mit sieben oder mehr fünf- oder sechsgliedrigen Ringen besteht und

  - einer weiteren Komponente, Komponente E, die ebenfalls eine dielektrische Anisotropie im Bereich von mehr als -5,0 und von weniger als 10,0 aufweist und aus Verbindungen mit bis zu sechs fünf- oder sechsgliedrigen Ringen besteht.

Typische Beispiele für fünfgliedrige Ringe sind

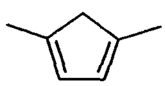 , 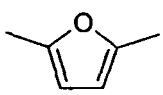 , 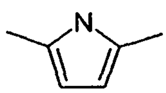 ,

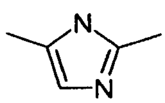

und andere.

Typische Beispiele für sechsgliedrige Ringe sind

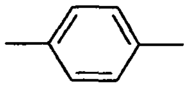 , 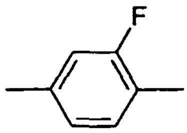 , 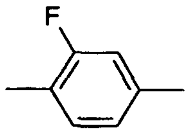 ,

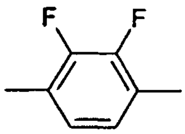 , 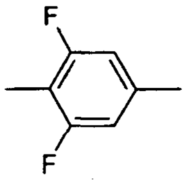 , 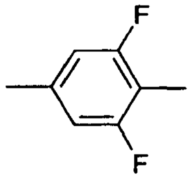 ,

und

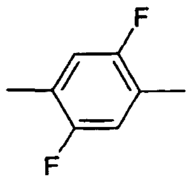 .

Die fünf- und sechsgliedrigen Ringe umfassen auch gesättigte, sowie teilgesättigte Ringe, ebenso wie heterocyclische Ringe.

Im Sinne der vorliegenden Anmeldung werden kondensierte Ringsysteme, die aus zwei dieser Ringe, i. e. aus zwei fünfgliedrigen, einem fünfgliedrigen oder aus zwei sechsgliedrigen Ringen, bestehen, wie z. B.

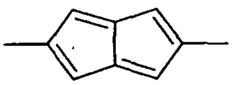 , 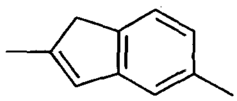 und 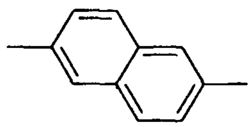

bei der Zuordnung der Verbindungen zu den Komponenten D bzw. E als einer dieser fünf- bzw. sechsgliedrigen Ringe gezählt.

Entsprechend werden kondensierte Ringsysteme, die aus einer Kombination von dreien oder mehreren dieser Ringe bestehen, die in Längsrichtung im Molekül eingebaut sind, wie z. B.

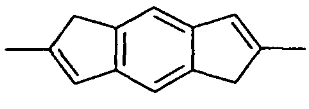 , 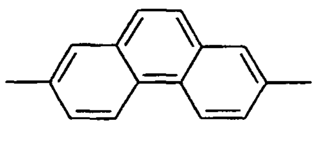

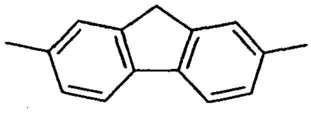 und 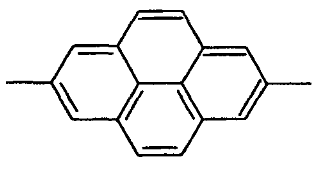

als zwei dieser fünf- bzw. sechsgliedrigen Ringe gezählt.

Im Gegensatz dazu, werden kondensierte Ringsysteme, die in Querrichtung im Molekül eingebaut sind, wie z. B.

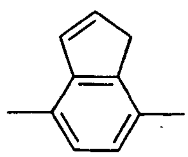, 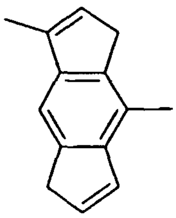, 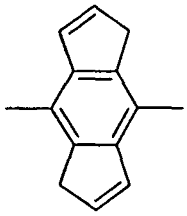,

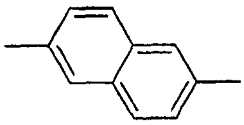, 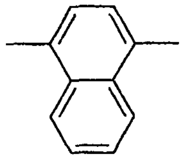,

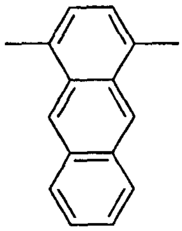, 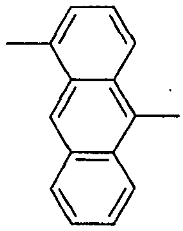, 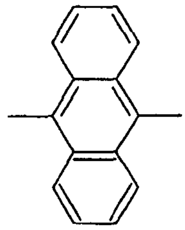,

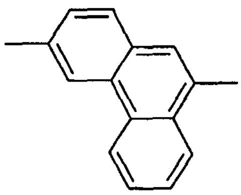, 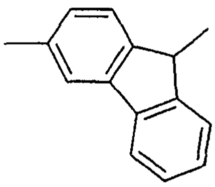 und 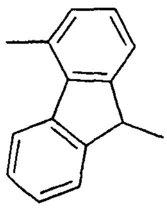

als einer dieser fünf- bzw. sechsgliedrigen Ringe gezählt.

Gegenstand der vorliegenden Erfindung ist ebenfalls die Verwendung der direkt vorhergehend, sowie weiter unten beschriebenen, flüssigkristallinen Medien, in Bauteilen für die Hochfrequenztechnik.

In einer bevorzugten Ausführungsform der vorliegenden Erfindung enthält das Flüssigkristallmedium eine oder mehrere Verbindungen der Formeln I, bevorzugt ausgewählt aus der Gruppe der Verbindungen der Formeln I-1 bis I-3, bevorzugt der Formeln I-1 und/oder I-2 und/oder I-3, bevorzugt der Formeln I-1 und I-2, stärker bevorzugt bestehen diese Verbindungen der Formel I überwiegend, noch stärker bevorzugt bestehen sie im Wesentlichen und ganz besonders bevorzugt bestehen sie vollständig daraus:

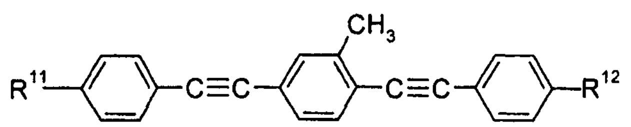 I-1

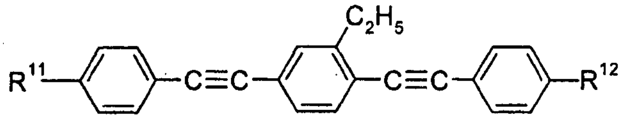 I-2

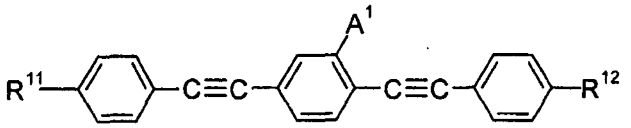 I-3

worin

$A^1$ Cycloalkyl mit 3 bis 6 C-Atomen, bevorzugt Cyclopropyl, Cyclobutyl oder Cyclohexyl, besonders bevorzugt Cyclopropyl oder Cyclohexyl und ganz besonders bevorzugt Cyclopropyl

bedeutet und die anderen Parameter die jeweiligen oben bei Formel I angegebenen Bedeutungen haben und bevorzugt

$R^{11}$ unfluoriertes Alkyl mit 1 bis 7 C-Atomen, und

$R^{12}$ unfluoriertes Alkyl mit 1 bis 7 C-Atomen oder unfluoriertes Alkoxy mit 1 bis 7 C-Atomen,

bedeutet.

Bevorzugt enthalten diese erfindungsgemäß eingesetzten Medien neben der Komponente A eine Komponente ausgewählt aus den beiden Komponenten B und C und gegebenenfalls zusätzlich die Komponente D und/oder die Komponente E.

Bevorzugt enthalten diese erfindungsgemäßeingesetzten Medien zwei, drei oder vier, besonders bevorzugt zwei oder drei Komponenten ausgewählt aus der Gruppe der Komponenten A bis E. Bevorzugt enthalten diese Medien

- Komponente A und Komponente B, oder
- Komponente A, Komponente B und Komponente D und/oder E, oder
- Komponente A und Komponente C, oder
- Komponente A, Komponente C und Komponente D und/oder E.

Bevorzugt enthalten diese erfindungsgemäß eingesetzten Medien eine Komponente B und keine Komponente C oder umgekehrt.

Bevorzugt hat die stark dielektrisch positive Komponente, Komponente B, eine dielektrische Anisotropie von 20,0 oder mehr, stärker bevorzugt von 25,0 oder mehr, besonders bevorzugt von 30,0 oder mehr und ganz besonders bevorzugt von 40,0 oder mehr.

Bevorzugt hat die stark dielektrisch negative Komponente, Komponente C, eine dielektrische Anisotropie von -7,0 oder weniger, stärker bevorzugt von - 8,0 oder weniger, besonders bevorzugt von -10,0 oder weniger und ganz besonders bevorzugt von -15,0 oder weniger.

In einer bevorzugten Ausführungsform der vorliegenden Erfindung enthält die Komponente B eine oder mehrere Verbindungen ausgewählt aus der Gruppe der Verbindungen der Formeln IIA bis IIC

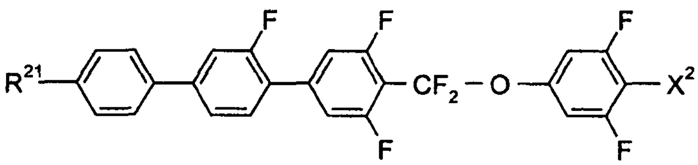

IIA

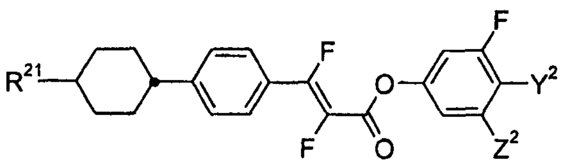

IIB

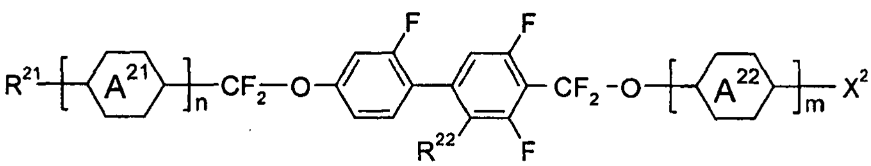

IIC

$R^{21}$ unfluoriertes Alkyl oder unfluoriertes Alkoxy jeweils mit 1 bis 15 C-Atomen oder unfluoriertes Alkenyl, unfluoriertes Alkenyloxy oder unfluoriertes Alkoxyalkyl jeweils mit 2 bis 15 C-Atomen, bevorzugt Alkyl, besonders bevorzugt n-Alkyl,

$R^{22}$ H, unfluoriertes Alkyl oder unfluoriertes Alkoxy jeweils mit 1 bis 5, bevorzugt mit 1 bis 3, besonders bevorzugt mit 3 C-Atomen,

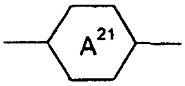 bis 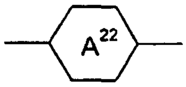

unabhängig voneinander und bei mehrfachem Auftreten auch diese untereinander jeweils unabhängig voneinander

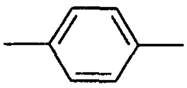, 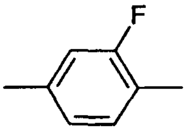, 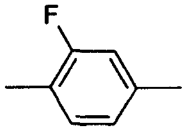,

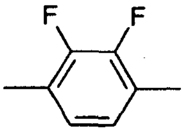, 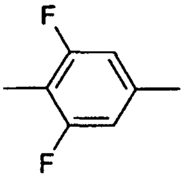, 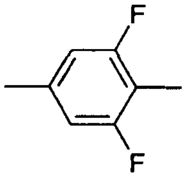,

oder

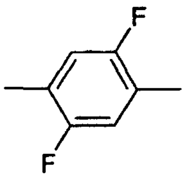,

vorzugsweise

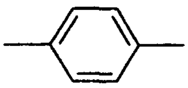, 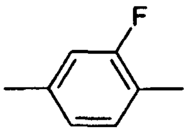

oder

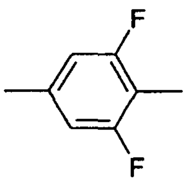,

bedeuten,

n und munabhängig voneinander 1 oder 2, bevorzugt

(n+m)3 oder 4 und, besonders bevorzugt

n2,

$X^2$F, Cl, $-CF_3$ oder $-OCF_3$, bevorzugt F oder Cl, besonders bevorzugt F,

$Y^2$ F, Cl, $-CF_3$, $-OCF_3$, oder CN, bevorzugt CN, und

$Z^2$ H oder F,
bedeuten.

Bevorzugte Verbindungen der Formel IIA sind die Verbindungen der entsprechenden Unterformel IIA-1

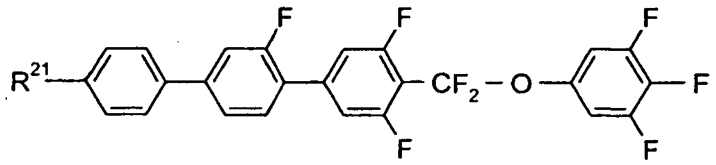

IIA-1

worin $R^{21}$ die oben gegebene Bedeutung hat.

Bevorzugte Verbindungen der Formel IIB sind die Verbindungen der entsprechenden Unterformeln IIB-1 und IIB-2

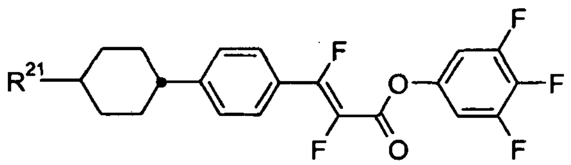

IIB-1

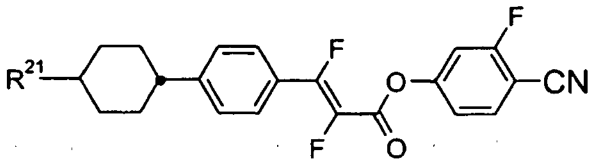

IIB-2

worin $R^{21}$ die oben gegebene Bedeutung hat.

Bevorzugte Verbindungen der Formel IIC sind die Verbindungen der entsprechenden Unterformeln IIC-1 und IIC-2

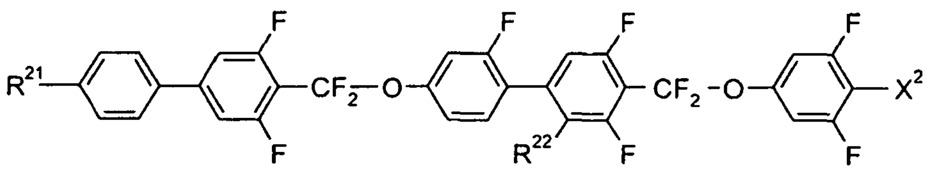

IIC-1

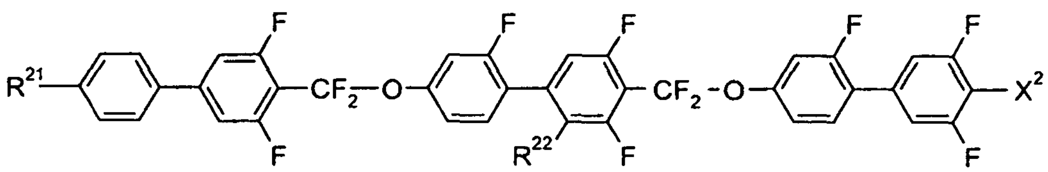

IIC-2

worin $R^{21}$, $R^{22}$ und $X^2$ die jeweiligen oben gegebenen Bedeutungen haben.

In einer bevorzugten Ausführungsform der vorliegenden Erfindung enthält die Komponente C eine oder mehrere Verbindungen ausgewählt aus der Gruppe der Verbindungen der Formeln IIIA und IIIB:

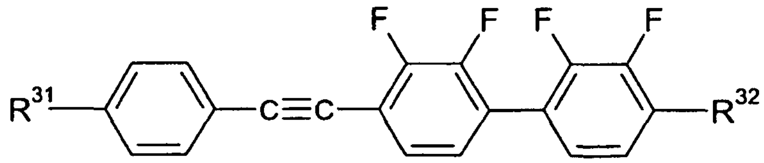

IIIA

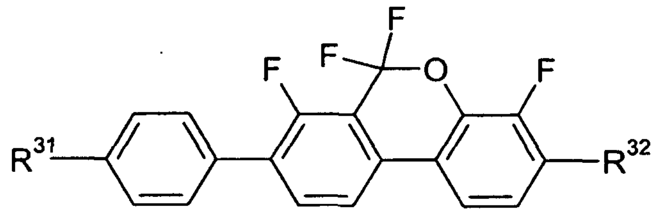

IIIB

worin

$R^{31}$ und $R^{32}$unabhängig voneinander die oben bei Formel IIA für $R^{21}$ die oben angegebene Bedeutung haben und bevorzugt

$R^{31}C_nH_{2n+1}$ oder $CH_2=CH-(CH_2)_Z$ und

$R^{32}C_mH_{2m+1}$ oder $O-C_mH_{2m+1}$ oder $(CH_2)_Z-CH=CH_2$
bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und $O-C_mH_{2m+1}$).

Bevorzugte Verbindungen der Formel IIIB sind die Verbindungen der Unterformeln IIIB-1 und IIIB-2

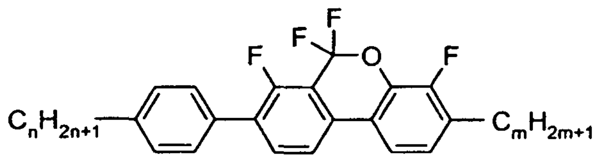

IIIB-1

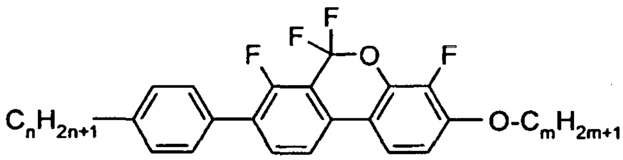

IIIB-2

worin

n und mjeweils die oben bei Formel IIIB gegebenen Bedeutungen haben und bevorzugt unabhängig voneinander eine ganze Zahl im Bereich von 1 bis 7
bedeuten.

In einer bevorzugten Ausführungsform der vorliegenden Erfindung enthält die Komponente D eine oder mehrere Verbindungen der folgenden Formel IV

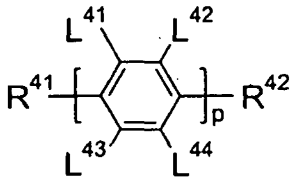

IV

worin

$R^{41}$ und $R^{42}$unabhängig voneinander eine der oben bei Formel I für $R^{11}$ die oben angegebenen Bedeutungen haben,

$L^{41}$ bis $L^{44}$bei jedem Erscheinen, jeweils unabhängig voneinander H, Alkyl mit 1 bis 5 C-Atomen, F oder Cl und

Peine ganze Zahl im Bereich von 7 bis 14, bevorzugt von 8 bis 12 und besonders bevorzugt von 9 bis 10 bedeuten
und bevorzugt
mindestens zwei der vorhandenen Substituenten

$L^{41}$ bis $L^{44}$eine von H verschiedene Bedeutung haben und

$R^{31}$$C_nH_{2n+1}$ oder $CH_2$=CH-$(CH_2)_Z$ und

$R^{32}$$C_mH_{2m+1}$ oder O-$C_mH_{2m+1}$ oder $(CH_2)_Z$-CH=$CH_2$
bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

In einer bevorzugten Ausführungsform der vorliegenden Anmeldung enthält das Flüssigkristallmedium zusätzlich eine weitere Komponente, Komponente E, die bevorzugt aus einer oder mehreren Verbindungen ausgewählt aus der Gruppe der Verbindungen der Formeln V bis IX besteht

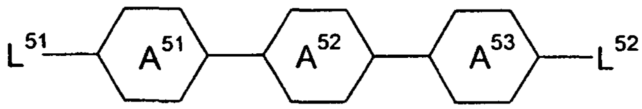

V

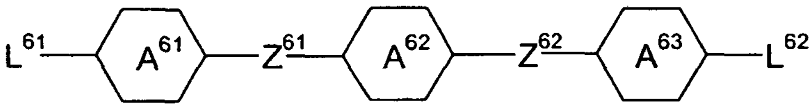

VI

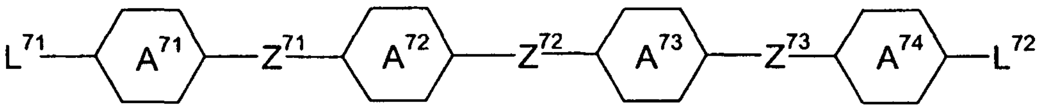

VII

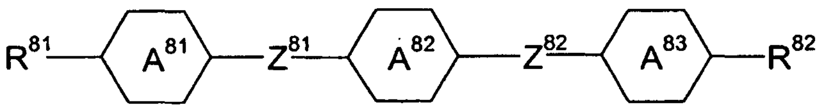

VIII

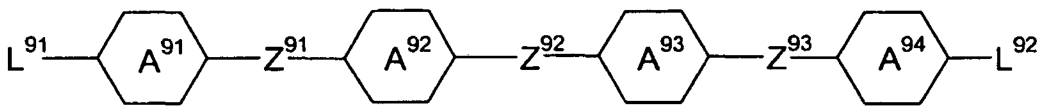

IX

worin

$L^{51}R^{51}$ oder $X^{51}$,

$L^{52}R^{52}$ oder $X^{12}$,

$R^{51}$ und $R^{52}$unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{51}$ und $X^{52}$unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

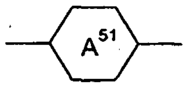
bis
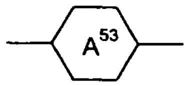

unabhängig voneinander

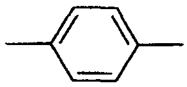,
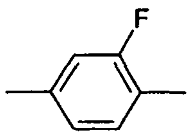,
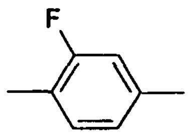,

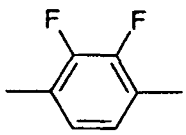,
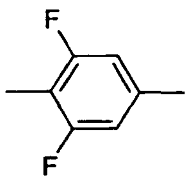,
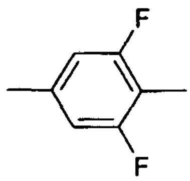,

oder

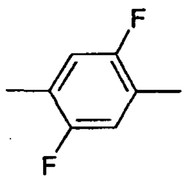,

vorzugsweise

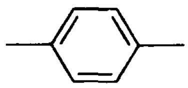,
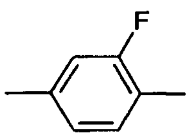,
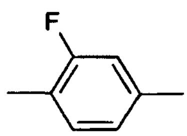,

oder

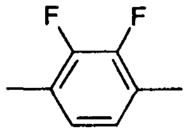

,

bedeuten,

$L^{61}R^{21}$ und, im Fall, dass $Z^{61}$ und/oder $Z^{62}$ *trans*- -CH=CH-oder *trans*- -CF=CF-, bedeutet, alternativ $X^{21}$, bedeutet,

$L^{62}R^{62}$ und, im Fall, dass $Z^{61}$ und/oder $Z^{62}$ *trans*- -CH=CH-oder *trans*- -CF=CF-, bedeutet, alternativ $X^{62}$, bedeutet,

$R^{61}$ und $R^{62}$unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl, bedeuten,

$X^{61}$ und $X^{62}$unabhängig voneinander F oder Cl, -CN, -NCS, $-SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen, oder -NCS, vorzugsweise -NCS, bedeuten,

einer von $Z^{61}$ und $Z^{62}$*trans*- -CH=CH-, *trans*- -CF=CF- oder -C ≡C- bedeutet und der andere unabhängig davon *trans*- -CH=CH-, *trans*-CF=CF- oder eine Einfachbindung bedeutet, vorzugsweise einer von ihnen -C ≡C- oder *trans*--CH=CH- und der andere eine Einfachbindung bedeutet, und

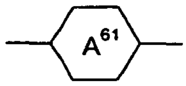

bis

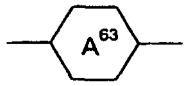

unabhängig voneinander

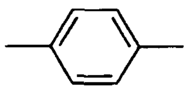

,

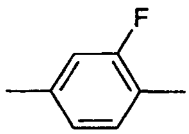

,

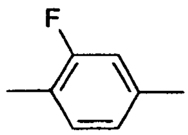

,

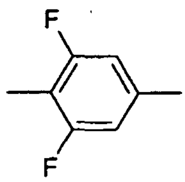

,

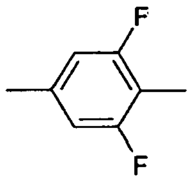

,

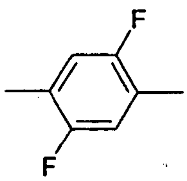

,

oder

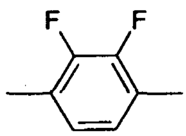

,

vorzugsweise

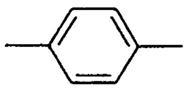, 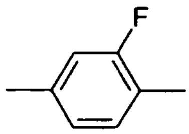, 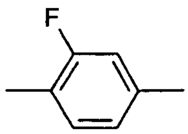,

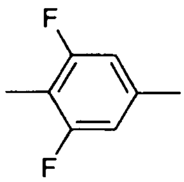, 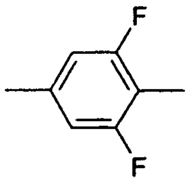,

oder

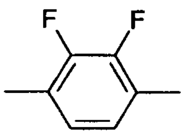,

bedeuten,

$L^{71}R^{71}$ oder $X^{71}$,

$L^{72}R^{72}$ oder $X^{72}$,

$R^{71}$ und $R^{72}$unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{71}$ und $X^{72}$unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{71}$ bis $Z^{73}$unabhängig voneinander *trans-* -CH=CH-, *trans*--CF=CF-, -C≡C- oder eine Einfachbindung bedeuten, vorzugsweise eines oder mehrere von ihnen eine Einfachbindung bedeutet, besonders bevorzugt alle eine Einfachbindung bedeuten und

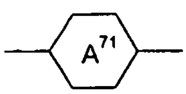 bis 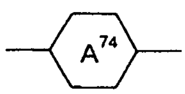

unabhängig voneinander

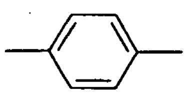, 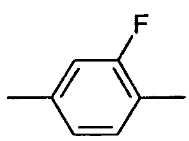, 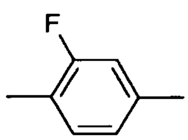,

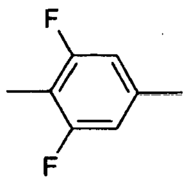,
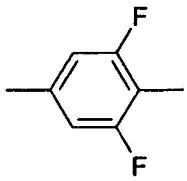,
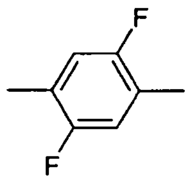,

oder

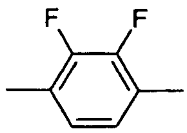,

vorzugsweise

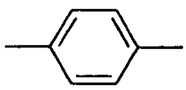,
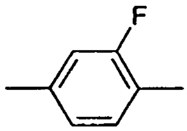,
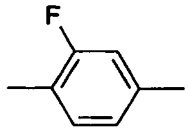,

oder

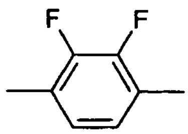,

bedeuten,

$R^{81}$ und $R^{82}$unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

einer von $Z^{81}$ und $Z^{82}$*trans*- -CH=CH-,. *trans*- -CF=CF- oder -C ≡C- bedeutet und der andere unabhängig davon *trans*- -CH=CH-, *trans*- - CF=CF- oder eine Einfachbindung bedeutet, vorzugsweise einer von ihnen -C ≡C- oder *trans*--CH=CH- und der andere eine Einfachbindung bedeutet, und

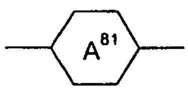
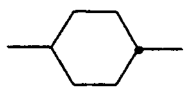

bedeutet,

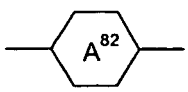
und
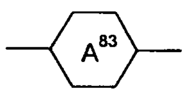

unabhängig voneinander

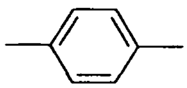, 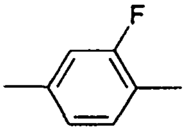, 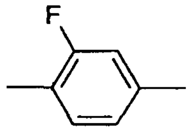,

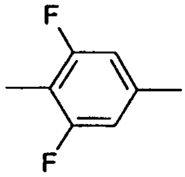, 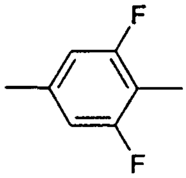, 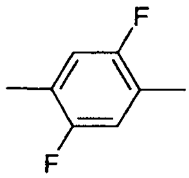,

oder

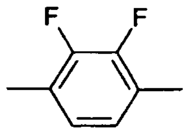

bedeuten,

$L^{91}R^{91}$ oder $X^{91}$ bedeutet,

$L^{92}R^{92}$ oder $X^{92}$ bedeutet,

$R^{91}$ und $R^{92}$unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

$X^{91}$ und $X^{92}$unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{91}$ bis $Z^{93}$unabhängig voneinander *trans*- -CH=CH-, *trans*--CF=CF-, -C ≡C- oder eine Einfachbindung bedeuten bevorzugt einer oder mehrere von ihnen eine Einfachbindung bedeutet, und besonders bevorzugt alle eine Einfachbindung bedeuten,

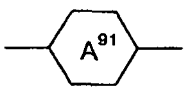

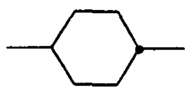, 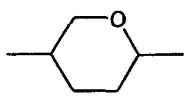

oder

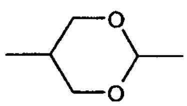

bedeutet,

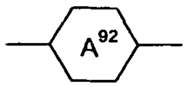

bis

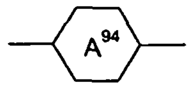

unabhängig voneinander

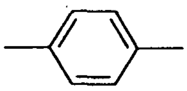

,

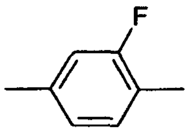

,

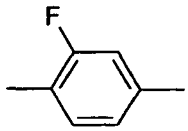

,

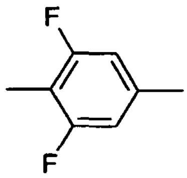

,

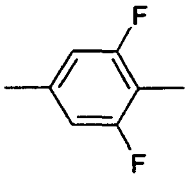

,

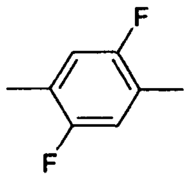

,

oder

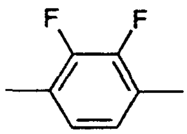

bedeuten,

und, wobei Verbindungen der Formel IIIA von den Verbindungen der Formel VI ausgeschlossen sind.

In einer bevorzugten Ausführungsform der vorliegenden Erfindung enthält das Flüssigkristallmedium eine oder mehrere Verbindungen der Formeln V, bevorzugt ausgewählt aus der Gruppe der Verbindungen der Formeln V-1 bis V-3, bevorzugt der Formeln V-1 und/oder V-2 und/oder V-3, bevorzugt der Formeln V-1 und V-2, stärker bevorzugt bestehen diese Verbindungen der Formel V überwiegend, noch stärker bevorzugt bestehen sie im Wesentlichen und ganz besonders bevorzugt bestehen sie vollständig daraus:

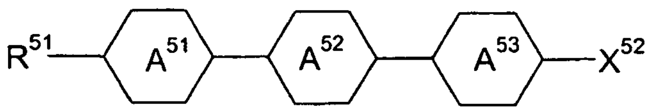

V-1

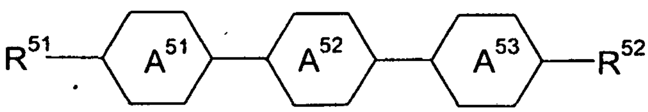

V-2

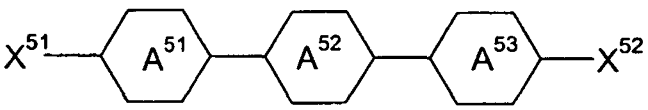

V-3

worin die Parameter die jeweiligen oben bei Formel V angegebenen Bedeutungen haben und bevorzugt

$R^{51}$unfluoriertes Alkyl mit 1 bis 7 C-Atomen oder unfluoriertes Alkenyl mit 2 bis 7 C-Atomen,

$R^{52}$unfluoriertes Alkyl mit 1 bis 7 C-Atomen oder unfluoriertes Alkenyl mit 2 bis 7 C-Atomen, oder unfluoriertes Alkoxy mit 1 bis 7 C-Atomen,

$X^{51}$ und $X^{52}$unabhängig voneinander F, Cl, $-OCF_3$, $-CF_3$, -CN, -NCS oder $-SF_5$, bevorzugt F, Cl, $-OCF_3$, oder -CN, bedeuten.

Bevorzugt werden die Verbindungen der Formeln V-1 ausgewählt aus der Gruppe der Verbindungen der Formeln V-1 a bis V-1 d, stärker bevorzugt bestehen diese Verbindungen der Formel V überwiegend, noch stärker bevorzugt bestehen sie im Wesentlichen und ganz besonders bevorzugt bestehen sie vollständig daraus:

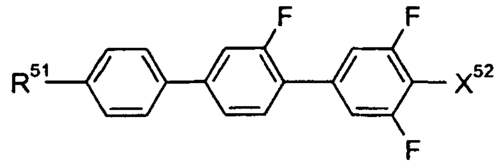

V-1a

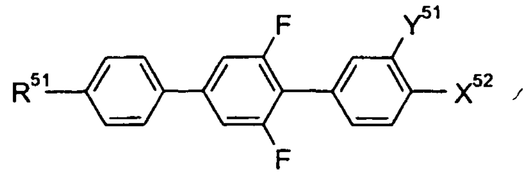

V-1b

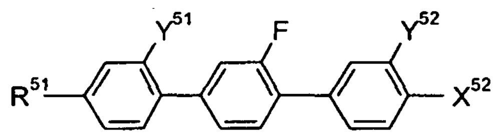

V-1c

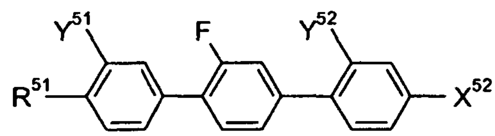

V-1d

worin die Parameter die jeweiligen oben bei Formel V-1 angegebenen Bedeutungen haben und worin

$Y^{51}$ und $Y^{52}$jeweils unabhängig voneinander H oder F bedeuten, und bevorzugt

$R^{51}$Alkyl oder Alkenyl, und

$X^{51}$F, Cl oder $-OCF_3$, bedeuten.

Bevorzugt werden die Verbindungen der Formeln V-2 ausgewählt aus der Gruppe der Verbindungen der Formeln V-2a bis V-2e und/oder aus der Gruppe der Verbindungen der Formeln V-2f und V-2g, stärker bevorzugt bestehen diese Verbindungen der Formel V überwiegend, noch stärker bevorzugt bestehen sie im Wesentlichen und ganz besonders bevorzugt bestehen sie vollständig daraus:

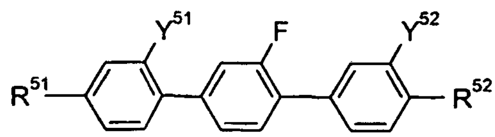

V-2a

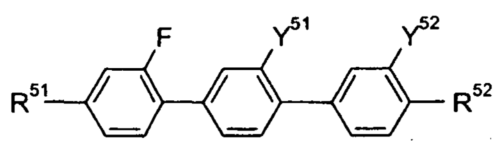

V-2b

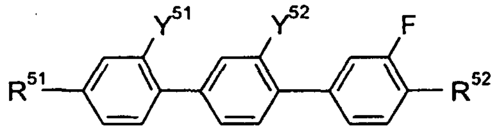

V-2c

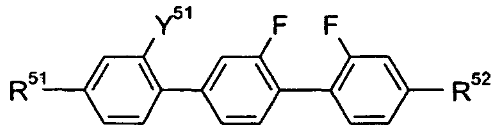

V-2d

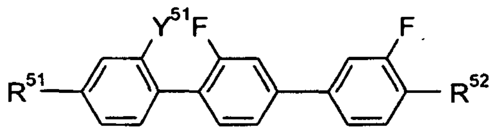

V-2e

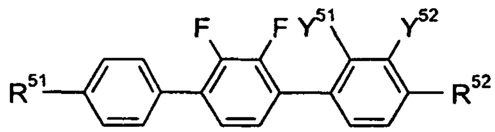

V-2f

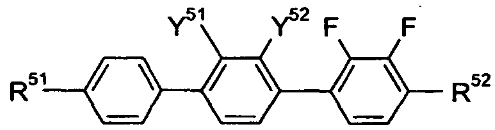

V-2g

wobei jeweils die Verbindungen der Formel V-2a von den Verbindungen der Formeln V-2b und V-2C, die Verbindungen der Formel V-2b von den Verbindungen der Formel V-2c und die Verbindungen der Formel V-2e von den Verbindungen der Formel V-2f ausgeschlossen sind, und
worin die Parameter die jeweiligen oben bei Formel V-1 angegebenen Bedeutungen haben und worin

$Y^{51}$ und $Y^{52}$jeweils unabhängig voneinander H oder F bedeuten, und bevorzugt

$R^{51}$Alkyl oder Alkenyl,

$X^{51}$F, Cl oder $-OCF_3$ bedeuten, und bevorzugt einer von

$Y^{51}$ und $Y^{52}$H und der andere H oder F bevorzugt ebenfalls H bedeutet.

Bevorzugt sind die Verbindungen der Formel V-3 Verbindungen der Formel V-3a:

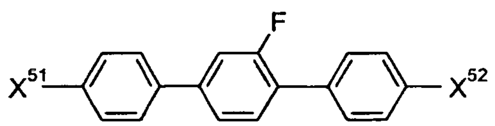

V-3a

worin die Parameter die jeweiligen oben bei Formel V-1 angegebenen Bedeutungen haben und worin bevorzugt

$X^{51}$F, Cl, bevorzugt F,

$X^{52}$F, Cl oder $-OCF_3$, bevorzugt $-OCF_3$ bedeutet.

In einer noch stärker bevorzugten Ausführungsform der vorliegenden Erfindung werden die Verbindungen der Formel V ausgewählt aus der Gruppe der Verbindungen V-1 a bis V-1 d, bevorzugt ausgewählt aus der Gruppe der Verbindungen V-1c und V-1d, stärker bevorzugt bestehen die Verbindungen der Formel V überwiegend, noch stärker bevorzugt bestehen sie im Wesentlichen und ganz besonders bevorzugt bestehen sie vollständig daraus:

Bevorzugt werden die Verbindungen der Formeln V-1 a ausgewählt aus der Gruppe der Verbindungen der Formeln V-1 a-1 und V-1 a-2, stärker bevorzugt bestehen diese Verbindungen der Formel V überwiegend, noch stärker bevorzugt bestehen sie im Wesentlichen und ganz besonders bevorzugt bestehen sie vollständig daraus:

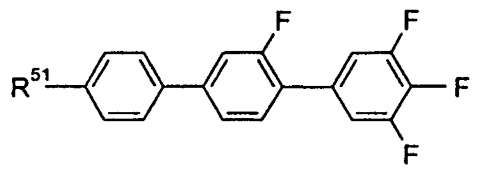

V-1a-1

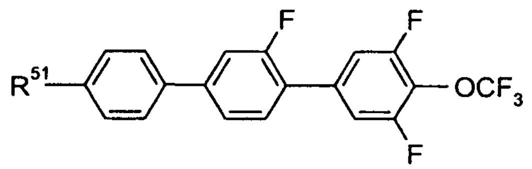

V-1a-2

worin

$R^{51}$die oben angegebene Bedeutung hat und bevorzugt $C_nH_{2n+1}$ bedeutet, worin

neine ganze Zahl im Bereich von 0 bis 7, bevorzugt im Bereich von 1 bis 5 und besonders bevorzugt 3 oder 7 bedeutet.
Bevorzugt sind die Verbindungen der Formeln V-1 b Verbindungen der Formel V-2b-1:

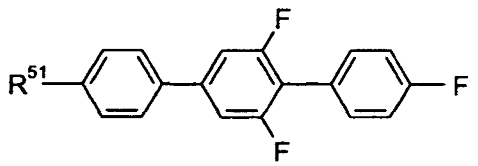

V-1b-1

worin

$R^{51}$die oben angegebene Bedeutung hat und bevorzugt $C_nH_{2n+1}$ bedeutet, worin

neine ganze Zahl im Bereich von 0 bis 15, bevorzugt im Bereich von 1 bis 7 und besonders bevorzugt 1 bis 5 bedeutet.
Bevorzugt werden die Verbindungen der Formeln V-1 c ausgewählt aus der Gruppe der Verbindungen der Formeln V-1c-1 bis und V-1c-4, bevorzugt ausgewählt aus der Gruppe der Verbindungen der Formeln V-1c-1 und V-1 c-2,stärker bevorzugt bestehen diese Verbindungen der Formel V überwiegend, noch stärker bevorzugt bestehen sie im Wesentlichen und ganz besonders bevorzugt bestehen sie vollständig daraus:

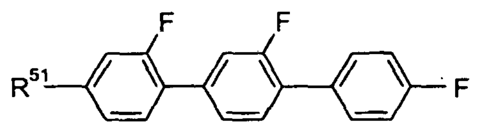

V-1c-1

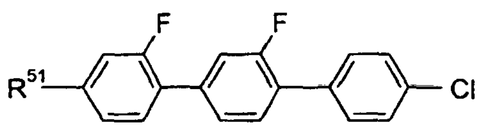

V-1c-2

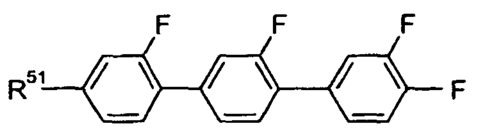

V-1c-3

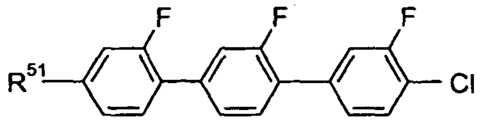

V-1c-4

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-1d ausgewählt aus der Gruppe der Verbindungen der Formeln V-1d-1 und V-1d-2, bevorzugt der Verbindung der Formeln V-1d-2, stärker bevorzugt bestehen diese Verbindungen der Formel V überwiegend, noch stärker bevorzugt bestehen sie im Wesentlichen und ganz besonders bevorzugt bestehen sie vollständig daraus:

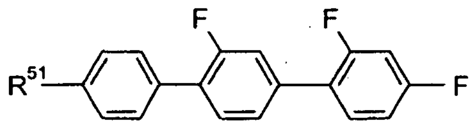

V-1d-1

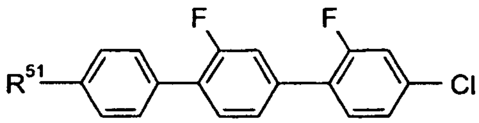

V-1d-2

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-2a ausgewählt aus der Gruppe der Verbindungen der Formeln V-2a-1 und V-2a-2, bevorzugt der Verbindungen der Formeln V-1a-1, stärker bevorzugt bestehen diese Verbindungen der Formel V überwiegend, noch stärker bevorzugt bestehen sie im Wesentlichen und ganz besonders bevorzugt bestehen sie vollständig daraus:

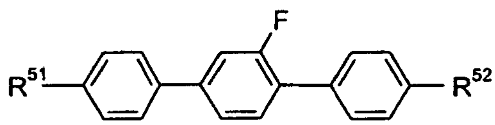

V-2a-1

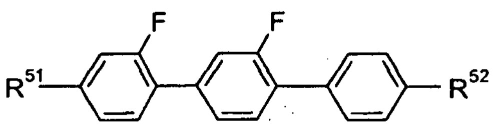

V-2a-2

worin

$R^{51}$ die oben angegebene Bedeutung hat und bevorzugt $C_nH_{2n+1}$ oder $CH_2=CH-(CH_2)_Z$ bedeutet, und

$R^{52}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugte Kombinationen von ($R^{51}$ und $R^{52}$), insbesondere bei Formel V-2a-1 sind ($C_nH_{2n+1}$ und $C_mH_{2m+1}$), ($C_nH_{2n+1}$ und $O-C_mH_{2m+1}$), ($CH_2=CH-(CH_2)_Z$ und $C_mH_{2m+1}$), ($CH_2=CH-(CH_2)_Z$ und $O-C_mH_{2m+1}$) und ($C_nH_{2n+1}$ und

$(CH_2)_Z$-CH=$CH_2$).

Bevorzugte Verbindungen der Formel V-2b sind die Verbindungen der Formel V-2b-1:

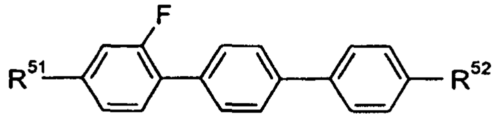

V-2b-1

worin

$R^{51}$ die oben angegebene Bedeutung hat und bevorzugt $C_nH_{2n+1}$ oder $CH_2$=CH-$(CH_2)_Z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2c sind die Verbindungen der Formel V-2c-1:

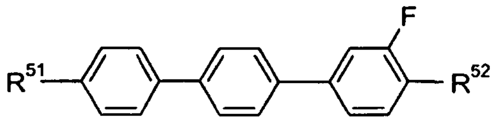

V-2c-1

worin

$R^{51}$ die oben angegebene Bedeutung hat und bevorzugt $C_nH_{2n+1}$ oder $CH_2$=CH-$(CH_2)_Z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2d sind die Verbindungen der Formel V-2d-1:

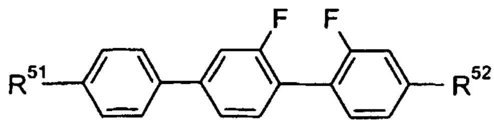

V-2d-1

worin

$R^{51}$ die oben angegebene Bedeutung hat und bevorzugt $C_nH_{2n+1}$ oder $CH_2$=CH-$(CH_2)_Z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2e sind die Verbindungen der Formel V-2e-1:

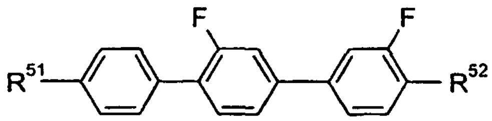

V-2e-1

worin

$R^{51}$die oben angegebene Bedeutung hat und bevorzugt $C_nH_{2n+1}$ oder $CH_2=CH-(CH_2)_Z$ bedeutet, und

$R^{52}$die oben angegebene Bedeutung hat und bevorzugt $C_mH_{2m+1}$ oder $O-C_mH_{2m+1}$ oder $(CH_2)_Z-CH=CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $O-C_mH_{2m+1}$).

Bevorzugte Verbindungen der Formel V-2e sind die Verbindungen der Formel V-2f1:

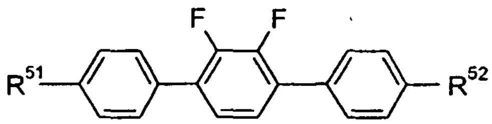

V-2f-1

worin

$R^{51}$die oben angegebene Bedeutung hat und bevorzugt $C_nH_{2n+1}$ oder $CH_2=CH-(CH_2)_Z$ bedeutet, und

$R^{52}$die oben angegebene Bedeutung hat und bevorzugt $C_mH_{2m+1}$ oder $O-C_mH_{2m+1}$ oder $(CH_2)_Z-CH=CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{51}$ und $R^{52}$) sind hier insbesondere ($C_nH_{2n+1}$ und $C_mH_{2m+1}$) und ($C_nH_{2n+1}$ und $O-C_mH_{2m+1}$), besonders bevorzugt ($C_nH_{2n+1}$ und $C_mH_{2m+1}$).

Bevorzugte Verbindungen der Formel V-2f sind die Verbindungen der Formel V-2f-1:

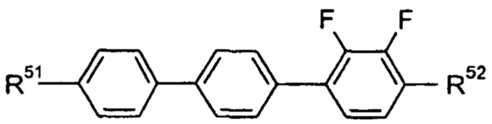

V-2f-1

worin

$R^{51}$die oben angegebene Bedeutung hat und bevorzugt $C_nH_{2n+1}$ oder $CH_2=CH-(CH_2)_Z$ bedeutet, und

$R^{52}$die oben angegebene Bedeutung hat und bevorzugt $C_mH_{2m+1}$ oder $O-C_mH_{2m+1}$ oder $(CH_2)_Z-CH=CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{51}$ und $R^{52}$) sind hier insbesondere ($C_nH_{2n+1}$ und $C_mH_{2m+1}$) und ($C_nH_{2n+1}$

und $O\text{-}C_mH_{2m+1}$), besonders bevorzugt ($C_nH_{2n+1}$ und $O\text{-}C_mH_{2m+1}$).

Bevorzugt werden die Verbindungen der Formeln VI ausgewählt aus der Gruppe der Verbindungen der Formeln VI-1 bis VI-4, stärker bevorzugt bestehen diese Verbindungen der Formel VI überwiegend, noch stärker bevorzugt bestehen sie im Wesentlichen und ganz besonders bevorzugt bestehen sie vollständig daraus:

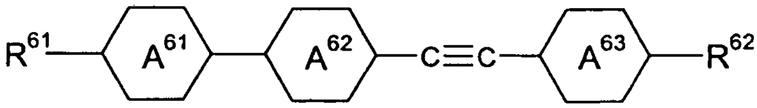

VI-1

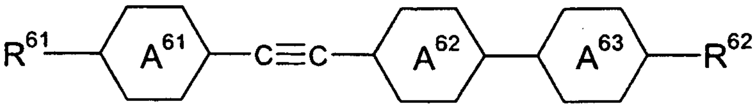

VI-2

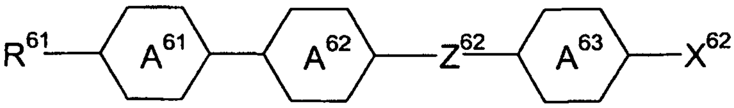

VI-3

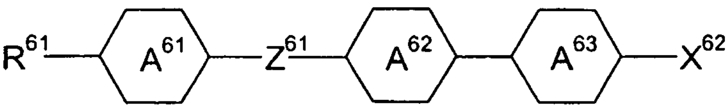

VI-4

worin

$Z^{61}$ und $Z^{62}$ *trans*- -CH=CH- oder *trans*- -CF=CF-, bevorzugt *trans*- -CH=CH-, bedeutet, und die übrigen Parameter die oben unter Formel VI gegebene Bedeutung haben und bevorzugt

$R^{61}$ und $R^{62}$ unabhängig voneinander H, unfluoriertes Alkyl oder Alkoxy mit 1 bis 7 C-Atomen oder unfluoriertes Alkenyl mit 2 bis 7 C-Atomen, bedeuten,

$X^{62}$ F, Cl, -CN oder -NCS, vorzugsweise -NCS, bedeutet,
und einer von

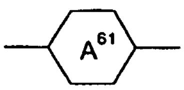

bis

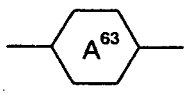

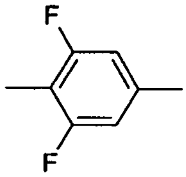

,

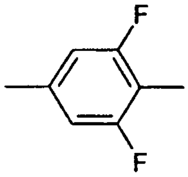

,

oder

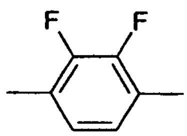

bedeutet

und die anderen unabhängig voneinander

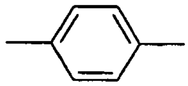, 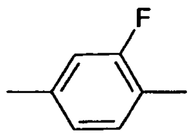, 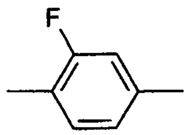,

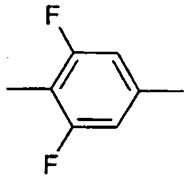, 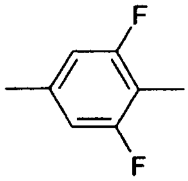, 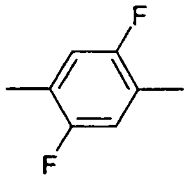,

oder

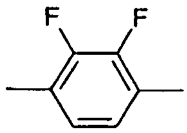,

vorzugsweise

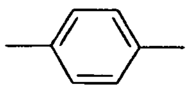, 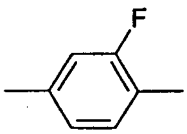, 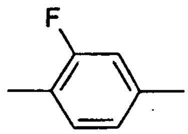,

oder

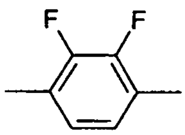,

bedeuten und bevorzugt

$R^{61}C_nH_{2n+1}$ oder $CH_2=CH-(CH_2)_Z$ bedeutet, und

$R^{62}C_mH_{2m+1}$ oder $O-C_mH_{2m+1}$ oder $(CH_2)_Z-CH=CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Bevorzugt werden die Verbindungen der Formeln VI-1 ausgewählt aus der Gruppe der Verbindungen der Formeln VI-1a und VI-1b, bevorzugt ausgewählt Verbindungen der Formeln VI-1a, stärker bevorzugt bestehen diese Verbindungen der Formel VI überwiegend, noch stärker bevorzugt bestehen sie im Wesentlichen und ganz besonders bevorzugt bestehen sie vollständig daraus:

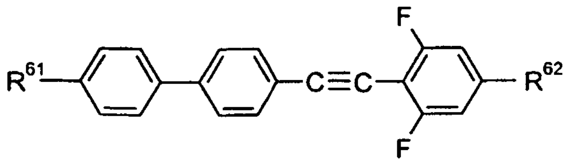

VI-1a

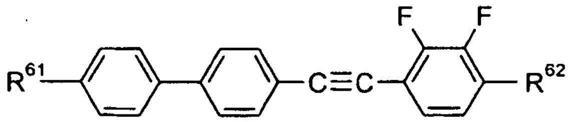

VI-1b

worin

$R^{61}$die oben angegebene Bedeutung hat und bevorzugt $C_nH_{2n+1}$ oder $CH_2$=CH-$(CH_2)_Z$ bedeutet, und

$R^{62}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{61}$ und $R^{62}$) sind hier insbesondere ($C_nH_{2n+1}$ und $C_mH_{2m+1}$) und ($C_nH_{2n+1}$ und O-$C_mH_{2m+1}$), bei Formel VI-1a besonders bevorzugt ($C_nH_{2n+1}$ und $C_mH_{2m+1}$) und bei Formel VI-1b besonders bevorzugt ($C_nH_{2n+1}$ und O-$C_mH_{2m+1}$).

Bevorzugt sind die Verbindungen der Formel VI-3 Verbindungen der Formel VI-3a:

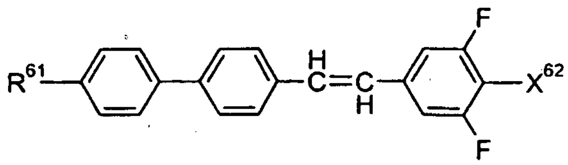

VI-3a

worin die Parameter die oben unter Formel VI-3 gegebene Bedeutung haben und bevorzugt

$R^{61}$die oben angegebene Bedeutung hat und bevorzugt $C_nH_{2n+1}$ bedeutet, worin

neine ganze Zahl im Bereich von 0 bis 7, bevorzugt im Bereich von 1 bis 5, und

$X^{62}$-F, _Cl, $OCF_3$, -CN oder -NCS, besonders bevorzugt-NCS, bedeutet.

Bevorzugt sind die Verbindungen der Formeln VI-4 Verbindungen der Formel VI-4a:

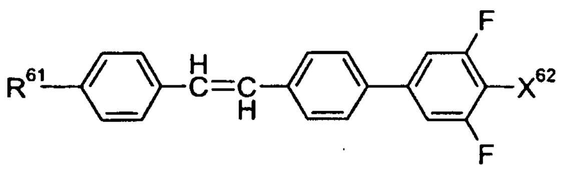

VI-4a

worin die Parameter die oben unter Formel VI-4 gegebene Bedeutung haben und bevorzugt

$R^{61}$die oben angegebene Bedeutung hat und bevorzugt $C_nH_{2n+1}$ bedeutet, worin

neine ganze Zahl im Bereich von 0 bis 7, bevorzugt im Bereich von 1 bis 5, und

$X^{62}$F, Cl, $OCF_3$, -CN oder -NCS, besonders bevorzugt -NCS, bedeutet.

Weitere bevorzugte Verbindungen der Formel VI sind die Verbindungen der folgenden Formeln

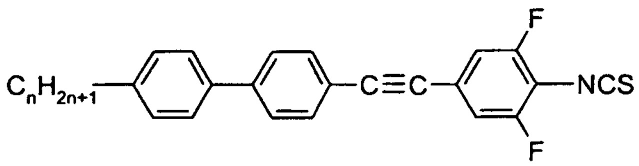

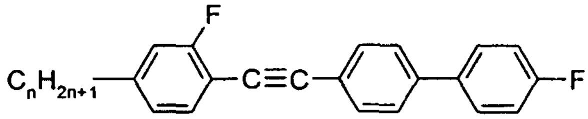

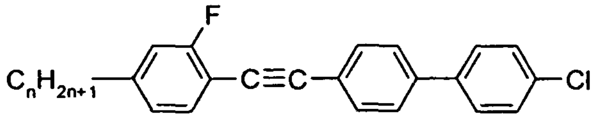

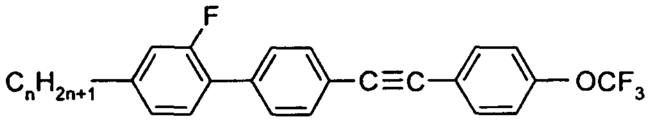

worin

$n$ eine ganze Zahl im Bereich von 0 bis 7, bevorzugt im Bereich von 1 bis 5 bedeutet.

Bevorzugt werden die Verbindungen der Formeln VII ausgewählt aus der Gruppe der Verbindungen der Formeln VII-1 bis VII-6, stärker bevorzugt bestehen diese Verbindungen der Formel VII überwiegend, noch stärker bevorzugt bestehen sie im Wesentlichen und ganz besonders bevorzugt bestehen sie vollständig daraus:

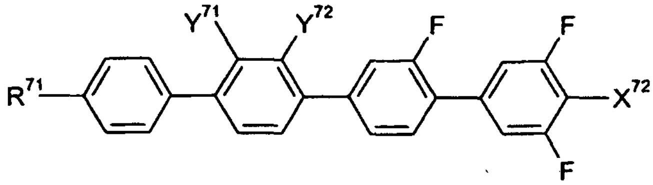

VII-1

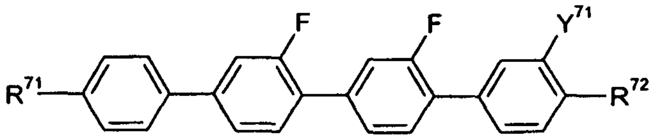

VII-2

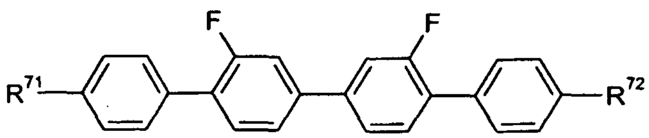

VII-3

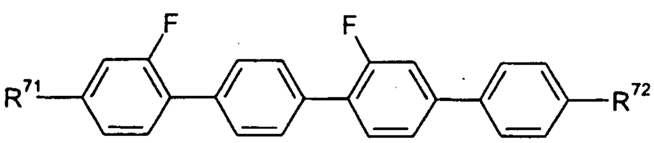

VII-4

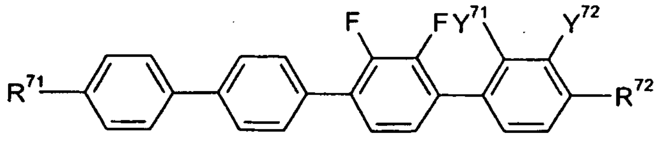

VII-5

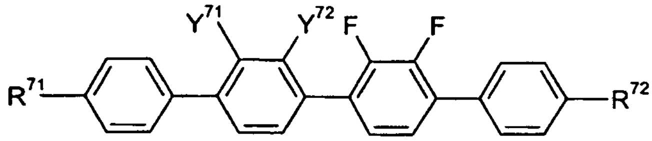

VII-6

wobei die Verbindungen der Formel VII-5 von den Verbindungen der Formel VII-6 ausgeschlossen sind, und worin die Parameter die jeweiligen oben bei Formel VII angegebenen Bedeutungen haben und bevorzugt

$R^{71}$ unfluoriertes Alkyl oder Alkoxy jeweils mit 1 bis 7 C-Atomen oder unfluoriertes Alkenyl mit 2 bis 7 C-Atomen,
$R^{72}$ unfluoriertes Alkyl oder Alkoxy, jeweils mit 1 bis 7 C-Atomen oder unfluoriertes Alkenyl mit 2 bis 7 C-Atomen, und
$X^{72}$ F, Cl, oder $-OCF_3$, bevorzugt F, bedeutet, und
besonders bevorzugt

$R^{71}$ die oben angegebene Bedeutung hat und bevorzugt $C_nH_{2n+1}$ oder $CH_2=CH-(CH_2)_Z$ bedeutet, und

$R^{72}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugt werden die Verbindungen der Formeln VII-1 ausgewählt aus der Gruppe der Verbindungen der Formeln VII-1a bis VII-1d, stärker bevorzugt bestehen diese Verbindungen der Formel VII-1 überwiegend, noch stärker bevorzugt bestehen sie im Wesentlichen und ganz besonders bevorzugt bestehen sie vollständig daraus:

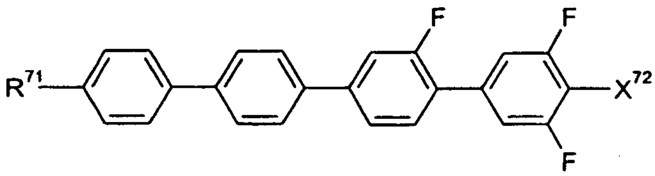

VII-1a

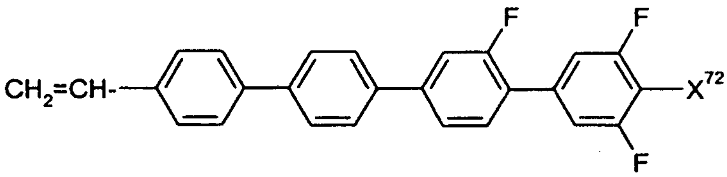

VII-1b

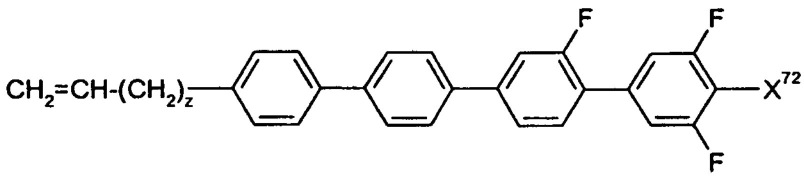

VII-1c

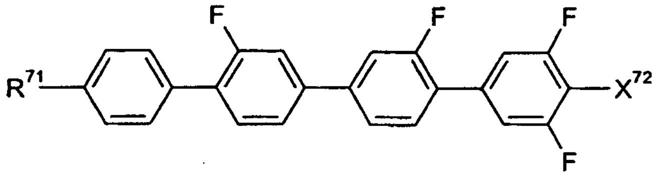

VII-1d

worin $X^{72}$ die oben bei Formel VII-2 gegebene Bedeutung hat und

$R^{71}$die oben angegebene Bedeutung hat und bevorzugt $C_nH_{2n+1}$ bedeutet, worin

n1 bis 7, bevorzugt 2 bis 6, besonders bevorzugt 2, 3 oder 5 und

z0, 1, 2, 3 oder 4, bevorzugt 0 oder 2, und

$X^{72}$bevorzugt F
bedeutet.

Bevorzugt werden die Verbindungen der Formeln VII-2 ausgewählt aus der Gruppe der Verbindungen der Formeln VII-2a und VII-2b, bevorzugt der Formel VII-2a, stärker bevorzugt bestehen diese Verbindungen der Formel VII-2 überwiegend, noch stärker bevorzugt bestehen sie im Wesentlichen und ganz besonders bevorzugt bestehen sie vollständig daraus:

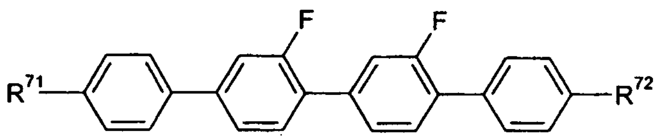

VII-2a

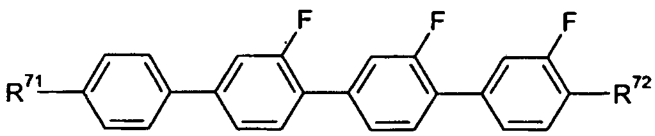

VII-2b

worin

$R^{71}$die oben angegebene Bedeutung hat und bevorzugt $C_nH_{2n+1}$ oder $CH_2$=CH-$(CH_2)_Z$ bedeutet, und

$R^{72}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-3 Verbindungen der Formel VII-3a:

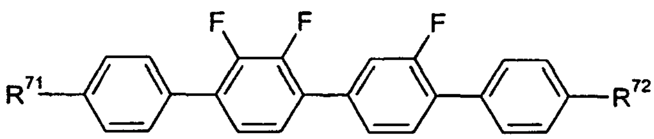

VII-3a

worin

$R^{71}$die oben angegebene Bedeutung hat und bevorzugt $C_nH_{2n+1}$ oder $CH_2$=CH-$(CH_2)_Z$ bedeutet, und

$R^{72}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-4 Verbindungen der Formel VII-4a:

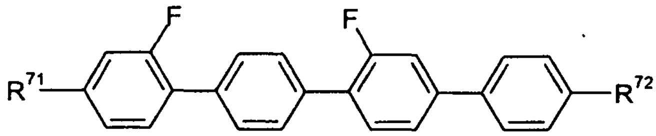

VII-4a

worin

$R^{71}$die oben angegebene Bedeutung hat und bevorzugt $C_nH_{2n-1}$ oder $CH_2$=CH-$(CH_2)_Z$ bedeutet, und

$R^{72}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_{nH2n+1}$ und $C_mH_{2m+1}$).

Bevorzugt werden die Verbindungen der Formeln VII-5 ausgewählt aus der Gruppe der Verbindungen der Formeln VII-5a und VII-5b, bevorzugt der Formel VII-5a stärker bevorzugt bestehen diese Verbindungen der Formel VII-5 überwiegend, noch stärker bevorzugt bestehen sie im Wesentlichen und ganz besonders bevorzugt bestehen sie vollständig daraus:

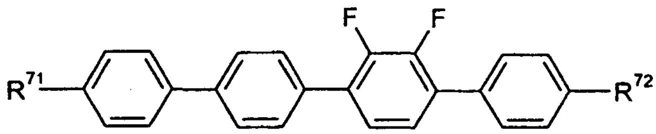

VII-5a

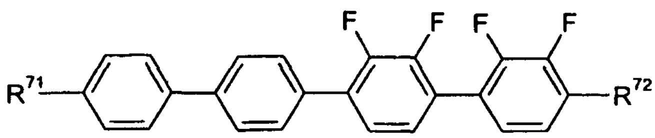

VII-5b

worin

$R^{71}$die oben angegebene Bedeutung hat und bevorzugt $C_nH_{2n+1}$ oder $CH_2$=CH-$(CH_2)_Z$ bedeutet, und

$R^{72}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt werden die Verbindungen der Formeln VII-6 ausgewählt aus der Gruppe der Verbindungen der Formeln VII-6a und VII-6b, stärker bevorzugt bestehen diese Verbindungen der Formel VII-6 überwiegend, noch stärker bevorzugt bestehen sie im Wesentlichen und ganz besonders bevorzugt bestehen sie vollständig daraus:

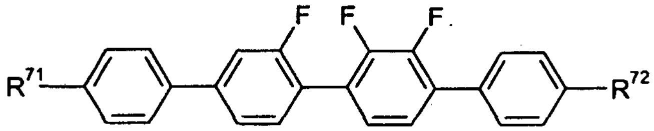

VII-6a

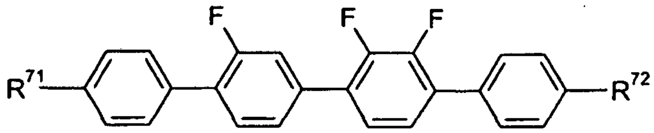

VII-6b

worin

$R^{71}$die oben angegebene Bedeutung hat und bevorzugt $C_nH_{2n+1}$ oder $CH_2$=CH-$(CH_2)_Z$ bedeutet, und

$R^{72}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und $C_mH_{2m+1}$).

Bevorzugt enthalten die flüssigkristallinen Medien gemäß der vorliegenden Anmeldung insgesamt 0 bis 40 %, bevorzugt 0 bis 30 % und besonders bevorzugt 5 bis 25 % an Verbindungen der Formel VIII.

Bevorzugt werden die Verbindungen der Formeln VIII ausgewählt aus der Gruppe der Verbindungen der Formeln VIII-1 bis VIII-3, stärker bevorzugt bestehen diese Verbindungen der Formel VIII überwiegend, noch stärker bevorzugt bestehen sie im Wesentlichen und ganz besonders bevorzugt bestehen sie vollständig daraus:

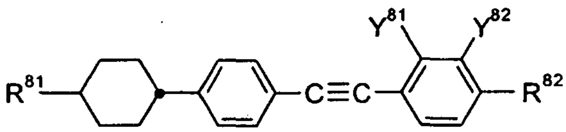

VIII-1

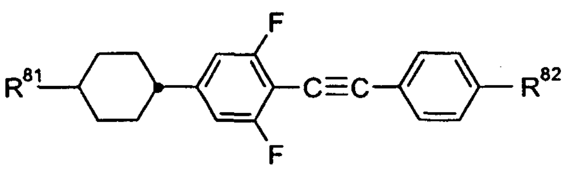

VIII-2

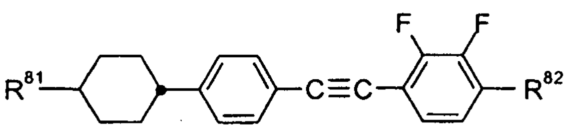

VIII-3

worin
einer von

$Y^{81}$ und $Y^{82}$H bedeutet und der andere H oder F bedeutet, und

$R^{81}$die oben angegebene Bedeutung hat und bevorzugt $C_nH_{2n+1}$ oder $CH_2$=CH-$(CH_2)_Z$ bedeutet, und

$R^{82}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_nH_{2m+1}$) und ($C_nH_{2n+1}$ und O-$C_mH_{2m+1}$) besonders bevorzugt ($C_nH_{2n+1}$ und $C_mH_{2m+1}$).

Bevorzugt werden die Verbindungen der Formeln VIII-1 ausgewählt aus der Gruppe der Verbindungen der Formeln VIII-1a bis VIII-1c, stärker bevorzugt bestehen diese Verbindungen der Formel VIII-1 überwiegend, noch stärker bevorzugt bestehen sie im Wesentlichen und ganz besonders bevorzugt bestehen sie vollständig daraus:

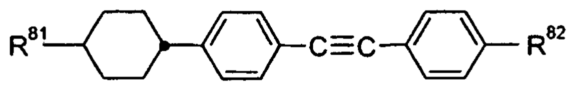

VIII-1a

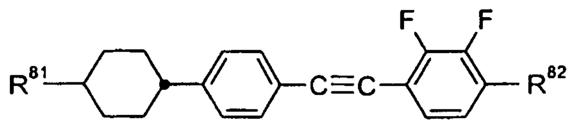

VIII-1b

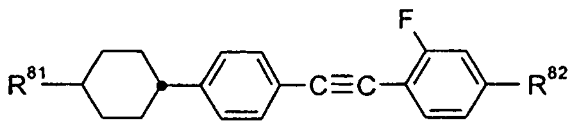

VIII-1c

worin

$R^{81}$die oben angegebene Bedeutung hat und bevorzugt $C_nH_{2n+1}$ oder $CH_2$=CH-$(CH_2)_Z$ bedeutet, und

$R^{82}$die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und munabhängig voneinander eine ganze Zahl im Bereich von 0 bis 15, bevorzugt im Bereich von 1 bis 7 und besonders bevorzugt 1 bis 5 bedeuten und

z0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und O-$C_mH_{2m+1}$) besonders bevorzugt ($C_nH_{2n+1}$ und $C_mH_{2m+1}$).

Bevorzugt sind die Verbindungen der Formel VIII-2 Verbindungen der Formel VIII-2a:

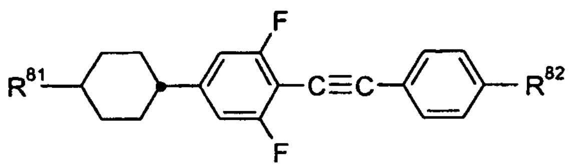

VIII-2a

worin

$R^{81}$die oben angegebene Bedeutung hat und bevorzugt $C_nH_{2n+1}$ oder $CH_2$=CH-$(CH_2)_z$ bedeutet, und

$R^{82}$die oben angegebene Bedeutung hat und bevorzugt $C_mH_{2m+1}$ oder O-$C_mH_{2m+1}$ oder $(CH_2)_Z$-CH=$CH_2$ bedeutet, und

worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$), $C_nH_{2n+1}$ und $O\text{-}C_mH_{2m+1}$) und ($CH_2\text{=}CH\text{-}(CH_2)_Z$ und $C_mH_{2m+1}$) besonders bevorzugt ($C_nH_{2n+1}$ und $C_mH_{2m+1}$).

Bevorzugt sind die Verbindungen der Formel VIII-3 Verbindungen der Formel VIII-3a:

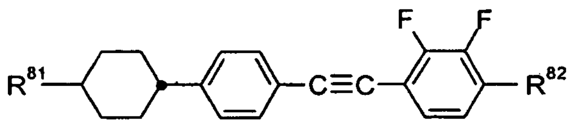

VIII-3a

worin

$R^{81}$ die oben angegebene Bedeutung hat und bevorzugt $C_nH_{2n+1}$ oder $CH_2\text{=}CH\text{-}(CH_2)_Z$ bedeutet, und

$R^{82}$ die oben angegebene Bedeutung hat und bevorzugt $C_mH_{2m+1}$ oder $O\text{-}C_mH_{2m+1}$ oder $(CH_2)_Z\text{-}CH\text{=}CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und $O\text{-}C_mH_{2m+1}$).

Bevorzugt werden die Verbindungen der Formeln IX ausgewählt aus der Gruppe der Verbindungen der Formeln IX-1 bis IX-3, stärker bevorzugt bestehen diese Verbindungen der Formel IX überwiegend, noch stärker bevorzugt bestehen sie im Wesentlichen und ganz besonders bevorzugt bestehen sie vollständig daraus:

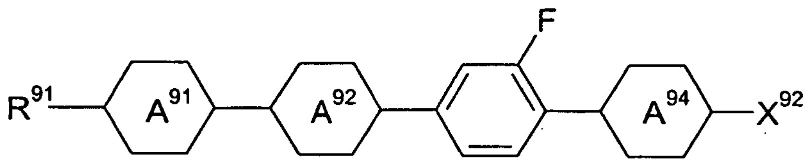

IX-1

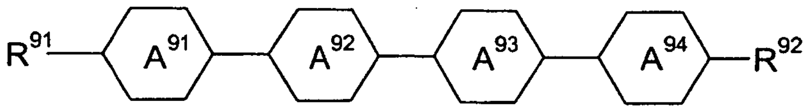

IX-2

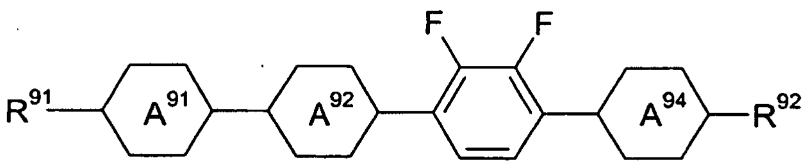

IX-3

worin die Parameter die jeweilige oben unter Formel IX angegebene Bedeutung haben und bevorzugt einer von

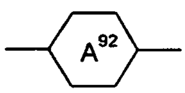

bis

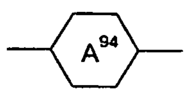

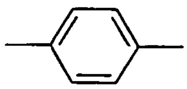, 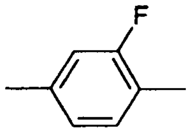, 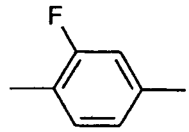,

bedeutet
und
worin

$R^{91}$ die oben angegebene Bedeutung hat und bevorzugt $C_nH_{2n+1}$ oder $CH_2=CH-(CH_2)_Z$ bedeutet, und

$R^{92}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und $O-C_mH_{2m+1}$).

Bevorzugt enthalten die flüssigkristallinen Medien gemäß der vorliegenden Anmeldung insgesamt 5 bis 30 %, bevorzugt 10 bis 25 % und besonders bevorzugt 15 bis 20 % an Verbindungen der Formel IX.

Bevorzugt werden die Verbindungen der Formeln IX-1 ausgewählt aus der Gruppe der Verbindungen der Formeln IX-1 a bis IX-1e, stärker bevorzugt bestehen diese Verbindungen der Formel IX-1 überwiegend, noch stärker bevorzugt bestehen sie im Wesentlichen und ganz besonders bevorzugt bestehen sie vollständig daraus:

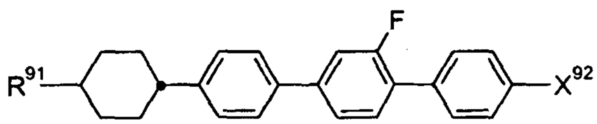 IX-1a

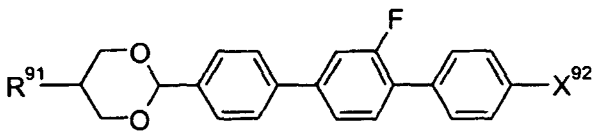 IX-1b

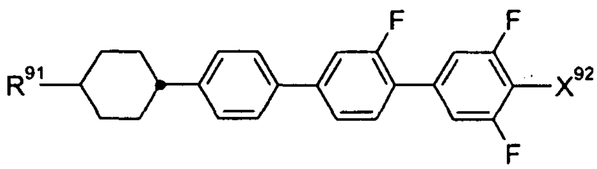 IX-1c

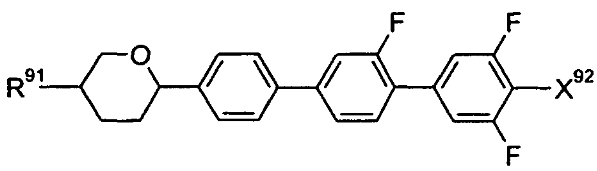 IX-1d

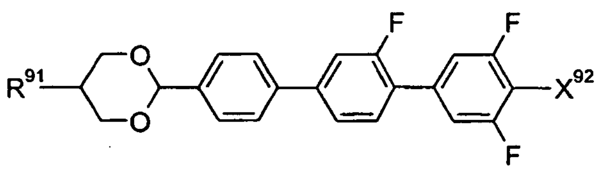 IX-1e

worin die Parameter die oben gegebene Bedeutung haben und bevorzugt

$R^{91}$ die oben angegebene Bedeutung hat und bevorzugt $C_nH_{2n+1}$ bedeutet, und

n eine ganze Zahl im Bereich von 0 bis 15, bevorzugt im Bereich von 1 bis 7 und besonders bevorzugt 1 bis 5 bedeutet und

$X^{92}$ bevorzugt F oder Cl bedeutet.

Bevorzugt werden die Verbindungen der Formeln IX-2 ausgewählt aus der Gruppe der Verbindungen der Formeln IX-2a und IX-2b, stärker bevorzugt bestehen diese Verbindungen der Formel IX-2 überwiegend, noch stärker bevorzugt bestehen sie im Wesentlichen und ganz besonders bevorzugt bestehen sie vollständig daraus:

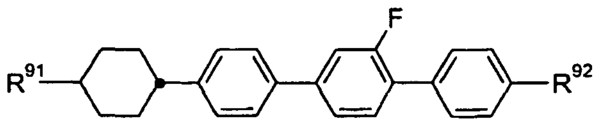

IX-2a

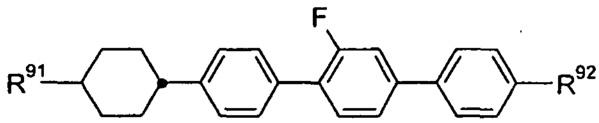

IX-2b

worin

$R^{91}$ die oben angegebene Bedeutung hat und bevorzugt $C_nH_{2n+1}$ oder $CH_2=CH-(CH_2)_Z$ bedeutet, und

$R^{92}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{91}$ und $R^{92}$) ist hier insbesondere ($C_nH_{2n+1}$ und $C_mH_{2m+1}$).

Bevorzugt sind die Verbindungen der Formel IX-3 Verbindungen der Formel IX-3:

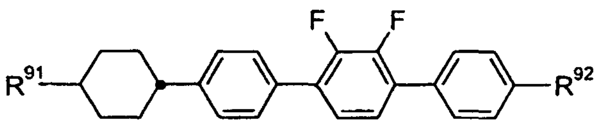

IX-3a

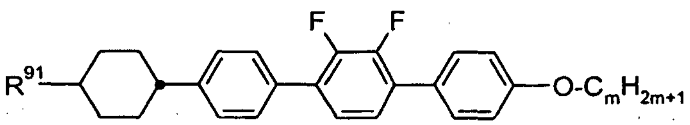

IX-3b

worin

$R^{91}$ die oben angegebene Bedeutung hat und bevorzugt $C_nH_{2n+1}$ oder $CH_2=CH-(CH_2)_z$ bedeutet, und

$R^{92}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und $O-C_mH_{2m+1}$), besonders bevorzugt ($C_nH_{2n+1}$ und $O-C_mH_{2m+1}$).

In einer bevorzugten Ausführungsform der vorliegenden Erfindung enthält das Medium eine oder mehrere dielektrisch positive Verbindungen mit einer dielektrischen Anisotropie von mehr als 3 der Formel V-1.
Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf und/oder sechsgliedrigen Ringen.

In einer bevorzugten Ausführungsform der vorliegenden Erfindung enthält das Medium eine oder mehrere Verbindungen der Formel VI.

In einer weiteren bevorzugten Ausführungsform der vorliegenden Erfindung enthält das Medium eine oder mehrere Verbindungen der Formel VII.

Die Definitionen der Abkürzungen (Akronyme) sind unten in Tabelle D angegeben, bzw. aus den Tabellen A bis C zu ersehen.

Vorzugsweise enthalten die flüssigkristallinen Medien gemäß der vorliegenden Erfindung Verbindungen ausgewählt aus der Gruppe der Verbindungen der Formeln I, II, IV und V, vorzugsweise I, II und IV oder ausgewählt aus der Gruppe der Verbindungen der Formeln I, III, IV und V, vorzugsweise I, III und IV, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr auf.

Vorzugsweise erstreckt sich die nematische Phase der erfindungsgemäß eingesetzten Medien mindestens von 20°C oder weniger bis 90°C oder mehr, bevorzugt bis 100°C oder mehr, stärker bevorzugt mindestens von 0°C oder weniger bis 120°C oder mehr, ganz bevorzugt mindestens von -10°C oder weniger bis 140°C oder mehr und insbesondere mindestens von -20°C oder weniger bis 150°C oder mehr.

Das $\Delta\varepsilon$ des gemäß der Erfindung eingesetzten Flüssigkristallmediums bei 1 kHz und 20°C beträgt vorzugsweise 1 oder mehr, stärker bevorzugt 2 oder mehr und ganz bevorzugt 3 oder mehr.

Das $\Delta n$ der gemäß der vorliegenden Erfindung eingesetzten Flüssigkristallmedien liegt bei 589 nm ($Na^D$) und 20°C vorzugsweise im Bereich von 0,200 oder mehr bis 0,90 oder weniger, stärker bevorzugt im Bereich von 0,250 oder mehr bis 0,90 oder weniger, noch stärker bevorzugt im Bereich von 0,300 oder mehr bis 0, 85 oder weniger und ganz besonders bevorzugt im Bereich von 0,350 oder mehr bis 0,800 oder weniger.

In einer bevorzugten Ausführungsform der vorliegenden Anmeldung beträgt das $\Delta n$ der gemäß der vorliegenden Erfindung eingesetzten Flüssigkristallmedien vorzugsweise 0,50 oder mehr, stärker bevorzugt 0,55 oder mehr.

Gemäß der vorliegenden Erfindung werden die einzelnen Verbindungen der Formel I in den Flüssigkristallmedien vorzugsweise in einer Gesamtkonzentration von 10 % bis 100 %, stärker bevorzugt von 30 % bis 95 %, noch stärker bevorzugt von 40 % bis 90 % und ganz bevorzugt von 50 % bis 90 % der Gesamtmischung verwendet.

In der Ausführungsform der vorliegenden Erfindung in der die eingesetzten Flüssigkristallmedien eine oder mehrere Verbindungen ausgewählt aus der Gruppe der Verbindungen der Formeln II A und IIB enthalten, werden die weiteren Verbindungen vorzugsweise wie folgt eingesetzt.

Die Verbindungen ausgewählt aus der Gruppe der Verbindungen der Formeln IIA und IIB werden vorzugsweise in einer Gesamtkonzentration von 1 % bis 30 %, stärker bevorzugt von 2 % bis 20 %, stärker bevorzugt von 3 % bis 18 % und ganz bevorzugt von 4 % bis 16 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % der Verbindungen der Formeln I, IIA, IIB und IV bis IX, vorzugsweise der Formeln I, IIA, IIB und IV, vorzugsweise bestehen sie überwiegend daraus und ganz bevorzugt bestehen sie vollständig daraus.

In der Ausführungsform der vorliegenden Erfindung in der die Flüssigkristallmedien eine oder mehrere Verbindungen ausgewählt aus der Gruppe der Verbindungen der Formel IIIA und IIIB enthalten, werden die weiteren Verbindungen vorzugsweise wie folgt eingesetzt.

Die Verbindungen ausgewählt aus der Gruppe der Verbindungen der Formel III A und IIIB werden vorzugsweise in einer Gesamtkonzentration von 1 % bis 60 %, stärker bevorzugt von 5 % bis 55 %, stärker bevorzugt von 7 % bis 50 % und ganz bevorzugt von 10 % bis 45 % der Gesamtmischung verwendet.

Wenn die Flüssigkristallmedien nur eine oder mehrere Verbindungen der Formel IIIA aber keine Verbindungen der Formel IIIB enthält, werden die Verbindungen der Formel IIIA vorzugsweise in einer Gesamtkonzentration von 10 % bis 60 %, stärker bevorzugt von 20 % bis 55 %, stärker bevorzugt von 30 % bis 50 % und ganz bevorzugt von 35 % bis 45 % der Gesamtmischung verwendet.

Wenn die Flüssigkristallmedien nur eine oder mehrere Verbindungen der Formel IIIB aber keine Verbindungen der Formel IIIA enthält, werden die Verbindungen der Formel IIIB vorzugsweise in einer Gesamtkonzentration von 5 % bis 45 %, stärker bevorzugt von 10 % bis 40 %, stärker bevorzugt von 15 % bis 35 % und ganz bevorzugt von 20 % bis 30 % der Gesamtmischung verwendet.

Wenn die Flüssigkristallmedien sowohl eine oder mehrere Verbindungen der Formel IIIA, als auch eine oder mehrere Verbindungen der Formel IIIB enthält, werden die Verbindungen der Formel IIIA vorzugsweise in einer Gesamtkonzentration von 5 % bis 50 %, stärker bevorzugt von 10 % bis 45 %, stärker bevorzugt von 15 % bis 30 % und ganz bevorzugt von 20 % bis 25 % der Gesamtmischung und die Verbindungen der Formel IIIB in einer Gesamtkonzentration von 1 % bis 35 %, stärker bevorzugt von 5 % bis 30 %, stärker bevorzugt von 7 % bis 25 % und ganz bevorzugt von 10 % bis 20 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % der Verbindungen der Formeln I, IIIA, IIB, und IV bis IX, vorzugsweise der Formeln I, IIIA und/oder IIIB und/oder, vorzugsweise bestehen sie überwiegend daraus und ganz bevorzugt bestehen sie vollständig daraus.

In einer besonders bevorzugten Ausführungsform der vorliegenden Erfindung enthalten die flüssigkristallinen Medien eine oder mehrere Verbindungen der Formel V und eine oder mehrere Verbindungen der Formel VI.

In einer weiteren besonders bevorzugten Ausführungsform der vorliegenden Erfindung enthalten die flüssigkristallinen Medien eine oder mehrere Verbindungen der Formel V und eine oder mehrere Verbindungen der Formel VII.

Ebenfalls bevorzugt enthalten die flüssigkristallinen Medien gemäß der vorliegenden Erfindung eine oder mehrere Verbindungen der Formel V, eine oder mehrere Verbindungen der Formel VI und eine oder mehrere Verbindungen der Formel VIII.

Wenn die flüssigkristallinen Medien gemäß der vorliegenden Anmeldung eine oder mehrere Verbindungen der Formel V enthalten, beträgt die Konzentration dieser Verbindungen bevorzugt insgesamt 10 bis 30 %, bevorzugt 15 bis 25 % und besonders bevorzugt 18 bis 22.

Wenn die flüssigkristallinen Medien gemäß der vorliegenden Anmeldung eine oder mehrere Verbindungen der Formel VI enthalten, beträgt die Konzentration dieser Verbindungen bevorzugt insgesamt 15 bis 35 %, bevorzugt 18 bis 30 % und besonders bevorzugt 22 bis 26 %.

Wenn die flüssigkristallinen Medien gemäß der vorliegenden Anmeldung eine oder mehrere Verbindungen der Formel VII enthalten, beträgt die Konzentration dieser Verbindungen bevorzugt insgesamt 4 bis 25 %, bevorzugt 8 bis 20 % und besonders bevorzugt 10 bis 14 %.

Wenn die flüssigkristallinen Medien gemäß der vorliegenden Anmeldung eine oder mehrere Verbindungen der Formel VIII enthalten, beträgt die Konzentration dieser Verbindungen bevorzugt insgesamt 15 bis 35 %, bevorzugt 18 bis 30 % und besonders bevorzugt 22 bis 26 %.

Wenn die flüssigkristallinen Medien gemäß der vorliegenden Anmeldung eine oder mehrere Verbindungen der Formel IX enthalten, beträgt die Konzentration dieser Verbindungen bevorzugt insgesamt 5 bis 25 %, bevorzugt 10 bis 20 % und besonders bevorzugt 13 bis 17 %.

In der vorliegenden Anmeldung beschreibt der Ausdruck dielektrisch positiv Verbindungen oder Komponenten mit $\Delta\varepsilon > 3,0$, dielektrisch neutral mit $-1,5 \leq \Delta\varepsilon \leq 3,0$ und dielektrisch negativ mit $\Delta\varepsilon < -1,5$. $\Delta\varepsilon$ wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 %

reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 μm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Hierbei gelten die folgenden Definitionen.

$$\Delta\varepsilon \equiv (\varepsilon_{||} - \varepsilon_{\perp})$$

und

$$\varepsilon_{\text{Mittel}} \equiv (\varepsilon_{||} + 2\,\varepsilon_{\perp}) / 3\ .$$

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie ($\Delta n$) wird bei einer Wellenlänge von 589,3 nm bestimmt. Die dielektrische Anisotropie ($\Delta\varepsilon$) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von $\Delta\varepsilon$ besitzen eine Schichtdicke von circa 20 μm. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon_{||}$) und Polyimid AL-1 054 von Japan Synthetic Rubber, Japan, für homogene Ausrichtung ($\varepsilon\perp$). Die Bestimmung der Kapazitäten erfolgt mit einem Frequenzgang-Analysegerät Solatron 1260 unter Verwendung einer Sinuswelle mit einer Spannung von 0,3 $V_{rms}$. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung ($V_{10}$), "Mittgrau-Spannung" ($V_{50}$) und Sättigungsspannung ($V_{90}$) wurden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 beschreiben.

Vergleiche hierzu auch A. Gaebler, F. Gölden, S. Müller, A. Penirschke und R. Jakoby "Direct Simulation of Material Permittivites ...", 12MTC 2009 - International Instrumentation and Measurement Technology Conference, Singapur, 2009 (IEEE), S. 463-467 und DE 10 2004 029 429 A, in der ebenfalls detailliert ein Meßverfahren beschrieben wird.

Der Flüssigkristall wird in eine Kapillare aus Polytetrafluorethylen (PTFE) gefüllt. Die Kapillare hat einen inneren Radius von 180 μm und einen äußeren Radius von 350 μm. Die effektive Länge beträgt 2,0 cm. Die gefüllte Kapillare wird in die Mitte der Kavität mit einer Resonanzfrequenz von 30 GHz eingebracht. Diese Kavität hat eine Länge von 6,6

mm, eine Breite von 7,1 mm und eine Höhe von 3,6 mm. Daraufhin wird das Eingangssignal ("source") angelegt und das Ergebnis des Ausgangssignals mit einem kommerziellen Netzwerkanalysator ("vector network analyzer") aufgenommen.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der A. Penirschke, S. Müller, P. Scheele, C. Weil, M. Wittek, C. Hock und R. Jakoby: "Cavity Perturbation Method for Characterization of Liquid Crystals up to 35GHz", 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld ergalten. Dazu wird das Magnetfeld eines Permanentmagneten verwendet. Die Stärke des Magnetfelds beträgt 0.35 Tesla. Die Orientierung des Magneten wird entsprechend eingestellt und dann entsprechend um 90° gedreht.

Bevorzugte Bauelemente sind Phasenschieber, Varaktoren, Funk- und Radiowellenantennenarrays, "matching circuit adaptive filters" und andere.

In der vorliegenden Anmeldung, bedeutet, wenn nicht ausdrücklich anders angegeben, der Begriff Verbindungen sowohl eine Verbindung, als auch mehrere Verbindungen.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis 140°C oder mehr und ganz besonders bevorzugt bis 160°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 $\mu$m, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch hohe optische Anisotropien im sichtbaren Bereich gekennzeichnet. Die Doppelbrechung bei 589 nm beträgt bevorzugt 0,20 oder mehr, besonders bevorzugt 0,25 oder mehr, besonders bevorzugt 0,30 oder mehr, besonders bevorzugt 0,40 oder mehr und ganz besonders bevorzugt 0,45 oder mehr. Außerdem beträgt die Doppelbrechung bevorzugt 0,80 oder weniger.

In einer bevorzugten Ausführungsform der vorliegenden Erfindung weisen die eingesetzten Flüssigkristallmedien eine positive dielektrische Anisotropie ($\Delta\varepsilon$) auf. Diese ist bevorzugt 1,8 oder größer und 15,0 oder kleiner, mehr bevorzugt 2,0 oder größer und 10,0 oder kleiner, besonders bevorzugt 3,0 oder größer und 8,0 oder kleiner und ganz besonders bevorzugt 3,5 oder größer und 6,0 oder kleiner.

Wenn die eingesetzten Flüssigkristallmedien eine negative dielektrische Anisotropie ($\Delta\varepsilon$) aufweisen, ist diese bevorzugt kleiner oder gleich -2,5, besonders bevorzugt kleiner oder gleich -4,0 und ganz besonders bevorzugt kleiner oder gleich -5,0.

In dieser bevorzugten Ausführungsform der vorliegenden Erfindung, in der die eingesetzten Flüssigkristallmedien eine negative dielektrische Anisotropie ($\Delta\varepsilon$) aufweisen, ist deren Betrag bevorzugt 1,5 oder größer und 15,0 oder kleiner, besonders bevorzugt 1,8 oder größer und 12,0 oder kleiner und ganz besonders bevorzugt 2,0 oder größer und 10,0 oder kleiner.

Ferner sind die erfindungsgemäßen Flüssigkristallmedien durch hohe Anisotropien im Mikrowellenbereich gekennzeichnet. Die Doppelbrechung beträgt z.B. bei ca. 8,3 GHz bevorzugt 0,14 oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

Die dielektrische Anisotropie im $\mu$-Wellenbereich ist definiert als

$$\Delta\varepsilon_r \equiv (\varepsilon_{r,||} - \varepsilon_{r,\perp}) .$$

Die Modulierbarkeit bzw. Steuerbarkeit ("tunability", $\tau$) ist definiert als

$$\tau \equiv (\Delta\varepsilon_r / \varepsilon_{r,||}) .$$

Die Materialgüte ($\eta$) ist definiert als

$$\eta \equiv (\tau \,/\, \tan \delta_{\varepsilon\, r,Max.}) \,,$$

mit
dem maximalen dielektrischen Verlust

$$\tan \delta_{\varepsilon\, r,Max.} \equiv Max.\, \{ \tan \delta_{\varepsilon\, r,\perp}; \tan \delta_{\varepsilon\, r,\parallel} \} \,.$$

Die Materialgüte (η) der bevorzugten Flüssigkristallmaterialien beträgt 6 oder mehr, bevorzugt 8 oder mehr, bevorzugt 10 oder mehr, bevorzugt 15 oder mehr, bevorzugt 17 oder mehr, bevorzugt 20 oder mehr, besonders bevorzugt 25 oder mehr und ganz besonders bevorzugt 30 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

In einigen Ausführungsformen können jedoch auch Flüssigkristalle mit eine negativen Wert der dielektrischen Anisotropie vorteilhaft verwendet werden.

Die eingesetzten Flüssigkristalle sind entweder Einzelsubstanzen oder Mischungen. Bevorzugt weisen sie eine nematische Phase auf.

Der Ausdruck "Alkyl" umfasst vorzugsweise geradkettige und verzweigte Alkylgruppen, sowie Cycloalkylgruppen, jeweils mit 1 bis 15 Kohlenstoffatomen, insbesondere die geradkettigen Gruppen Methyl, Ethyl, Propyl, Butyl, Pentyl, Hexyl und Heptyl, sowie Cyclopropyl und Cyclohexyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1E-Propenyl, 1E-Butenyl, 1E-Pentenyl, 1E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im Allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfasst vorzugsweise geradkettige Reste der Formel $C_nH_{2n+1}$-O-$(CH_2)_m$, worin n und m jeweils unabhängig voneinander eine ganze Zahl von 1 bis 10 bedeuten. Vorzugsweise ist n 1 und m 1 bis 6.

Verbindungen mir einer Vinyl-Endgruppe und Verbindungen mit einer Methyl-Endgruppe haben eine geringe Rotationsviskosität.

In der vorliegenden Anmeldung bedeuten sowohl Hochfrequenztechnik als auch Höchstfrequenztechnik Anwendungen mit Frequenzen im Bereich von 1 MHz bis 1 THz, bevorzugt von 1 GHz bis 500 GHz, stärker bevorzugt 2 GHz bis 300 GHz, insbesondere bevorzugt von ca. 5 bis 150 GHz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 15 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile

selbst gebrauchsfertige Mischungen sind, herzustellen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen $C_nH_{2n+1}$, $C_mH_{2m+1}$ und $C_lH_{2l+1}$ bzw. $C_nH_{2n-1}$. $C_mH_{2m-1}$ und $C_lH_{2l-1}$ bedeuten geradkettiges Alkyl bzw. Alkenyl, vorzugsweise 1-*E*-Alkenyl, jeweils mit n, m bzw. l C-Atomen, wobei n, m und l unabhängig voneinander eine ganze Zahl von 1 bis 9, bevorzugt bis 7 bzw. von 2 bis 9, bevorzugt bis 7 bedeuten. $C_oH_{2o+1}$ bedeutet geradkettiges Alkyl mit 1 bis 7, bevorzugt bis 4 C-Atomen, oder verzweigtes Alkyl mit 1 bis 7, bevorzugt bis 4 C-Atomen.

In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 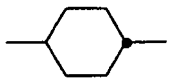 | **P** | 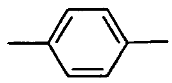 |
| **D** | 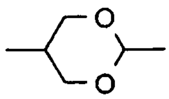 | **DI** | 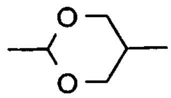 |
| **A** | 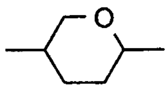 | **AI** | 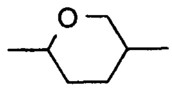 |
| **G** | 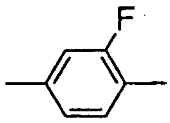 | **GI** | 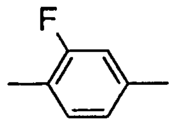 |
| **U** | 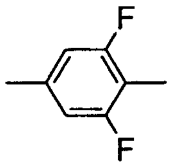 | **UI** | 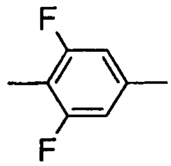 |
| **Y** | 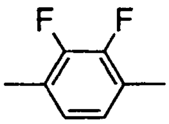 | | |
| **fX** | 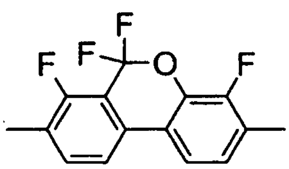 | **fXI** | 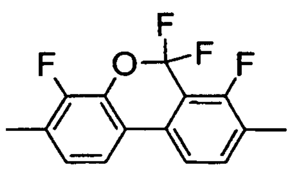 |
| **M** | 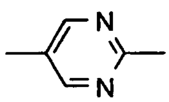 | **MI** | 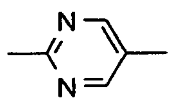 |
| **N** | 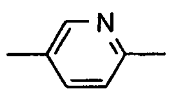 | **NI** | 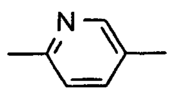 |
| **fN** | 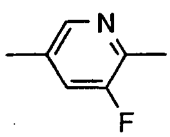 | **fNI** | 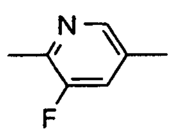 |

(fortgesetzt)

| | | | |
|---|---|---|---|
| dH | 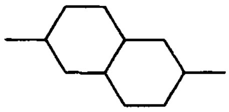 | Np | 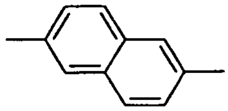 |
| N3f | 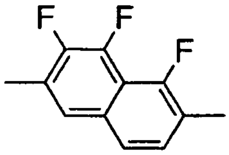 | N3fl | 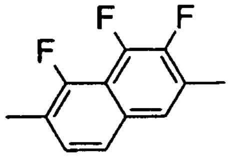 |
| tH | 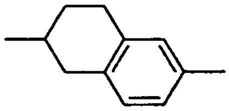 | tHl | 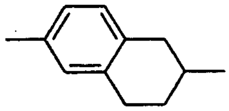 |
| tH2f | 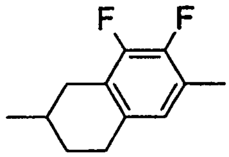 | tH2fl | 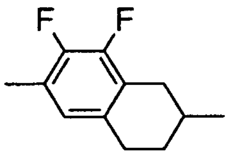 |
| K | 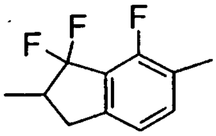 | Kl | 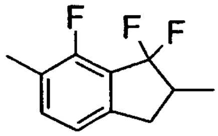 |
| L | 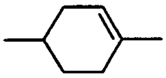 | Ll | 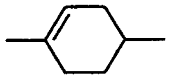 |
| F | 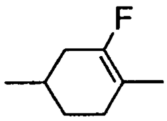 | Fl | 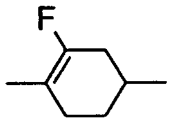 |
| P(o) | 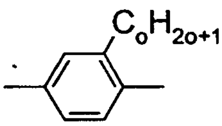 | Pl(o) | 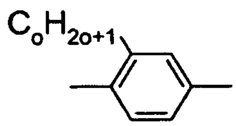 |
| P(i3) | 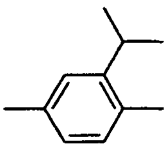 | Pl(c3) | 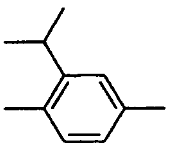 |
| P(t4) | 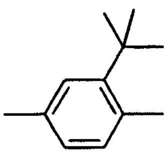 | Pl(t4) | 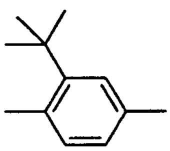 |
| P(c3) | 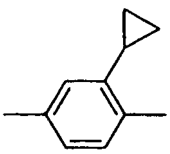 | Pl(c3) | 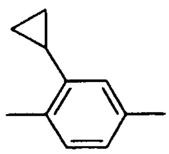 |
| P(c4) | 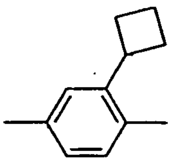 | Pl(c4) | 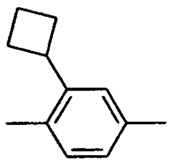 |

(fortgesetzt)

| | | | |
|---|---|---|---|
| **P(c5)** | 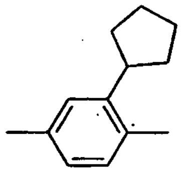 | **PI(c5)** | 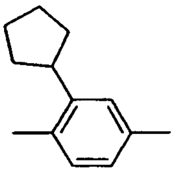 |
| **P(c5e)** | 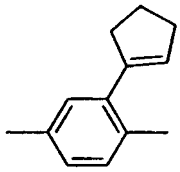 | **PI(c5e)** | 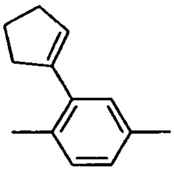 |
| **P(c6)** | 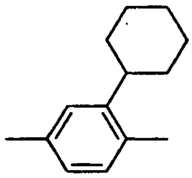 | **PI(c6)** | 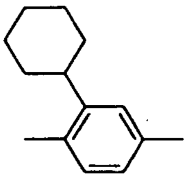 |

**Tabelle B: Verknüpfungsgruppen**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Tabelle C: Endgruppen**

| Linke Seite | | Rechte Seite, Verwendung allein | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO$ - | **-OD** | $-OCF_2H$ |
| **-TO-** | $CF_3O$ - | **-OT** | $-OCF_3$ |
| **-OXF-** | $CF_2=CH-O-$ | **-OXF** | $-O-CH=CF_2$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |

(fortgesetzt)

| Verwendung zusammen mit anderen | | | |
|---|---|---|---|
| **-...A...-** | -C≡C- | **-...A...** | -C≡C- |
| **-...V...-** | CH=CH- | **-...v...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**<u>Tabelle D: Beispielstrukturen</u>**

Die Beispielstrukturen zeigen besonders bevorzugt eingesetzte Verbindungen.

Beispiele für Verbindungen der Komponente A

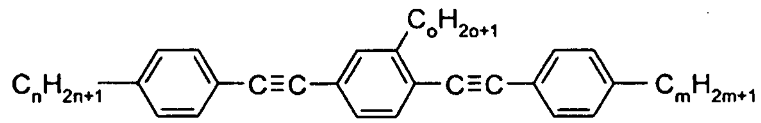

**PTP(o)TP-n-m**

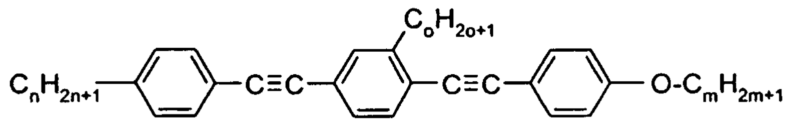

**PTP(o)TP-n-Om**

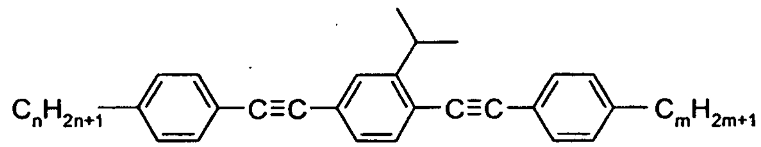

**PTP(i3)TP-n-m**

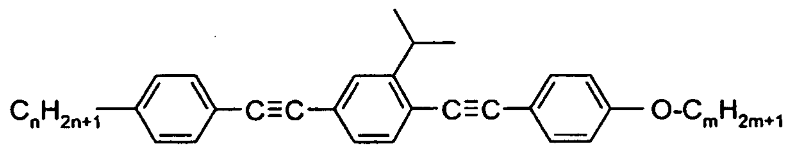

**PTP(i3)TP-n-Om**

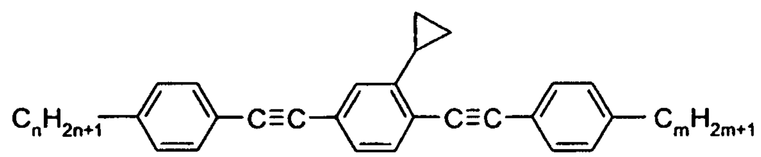

**PTP(c3)TP-n-m**

(fortgesetzt)

Die Beispielstrukturen zeigen besonders bevorzugt eingesetzte Verbindungen.

Beispiele für Verbindungen der Komponente A

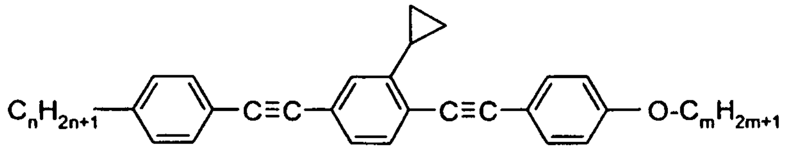

**PTP(c3)TP-n-Om**

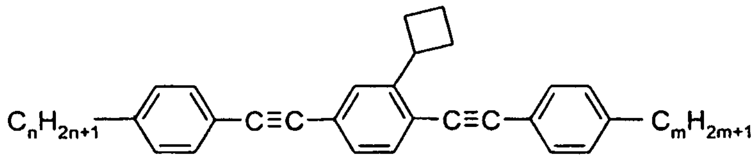

**PTP(c4)TP-n-m**

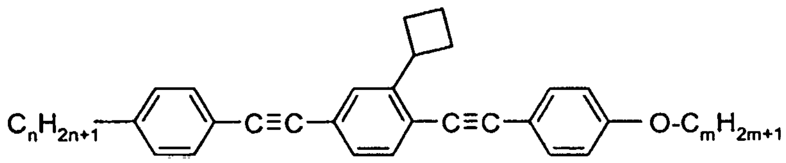

**PTP(c4)TP-n-Om**

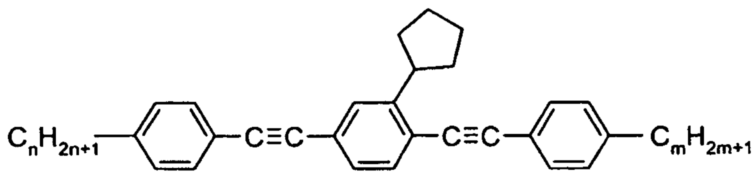

**PTP(c5)TP-n-m**

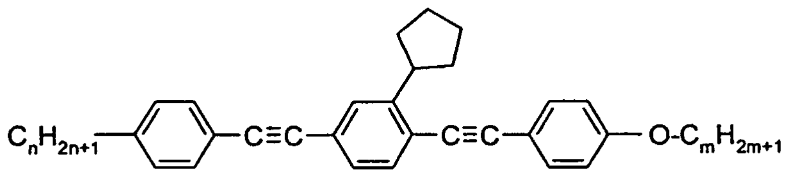

**PTP(c5)TP-n-Om**

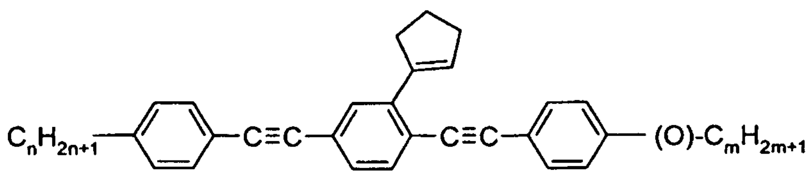

**PTP(c5e)TP-n-(O)m**

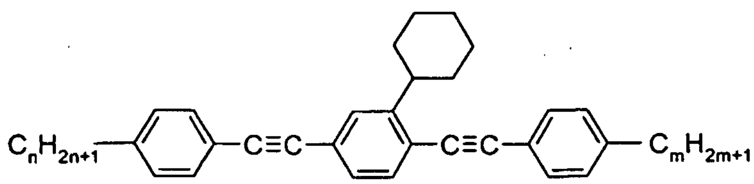

**PTP(c6)TP-n-m**

(fortgesetzt)

Die Beispielstrukturen zeigen besonders bevorzugt eingesetzte Verbindungen.

Beispiele für Verbindungen der Komponente A

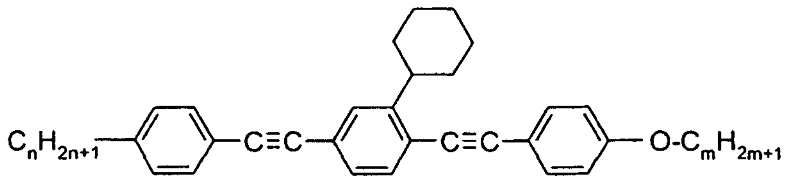

**PTP(c6)TP-n-Om**

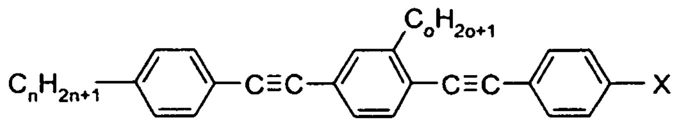

**PTP(o)TP-n-X, X= F, Cl**

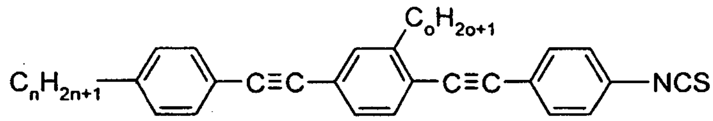

**PTP(o)TP-n-S**

Beispiele für Verbindungen der Komponente B

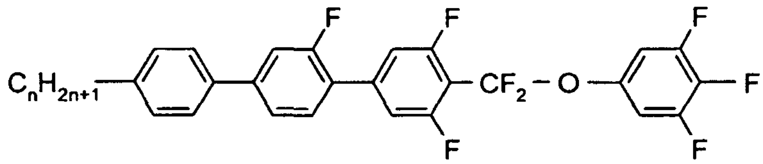

**PGUQU-n-F**

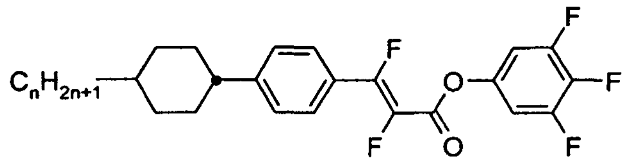

**CPWZU-n-F**

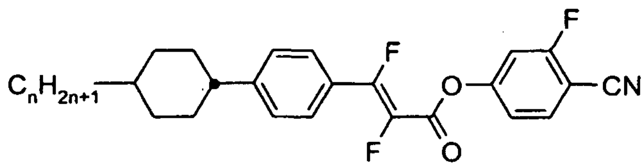

**CPWZG-n-N**

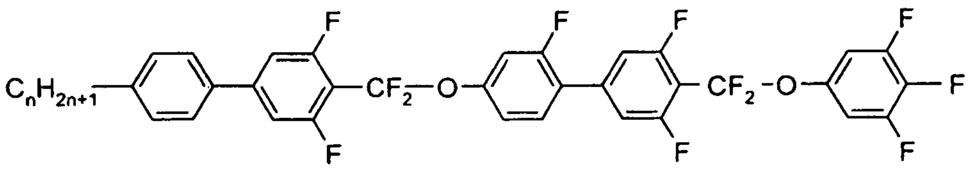

**PUQGUQU-n-F**

(fortgesetzt)

Beispiele für Verbindungen der Komponente B

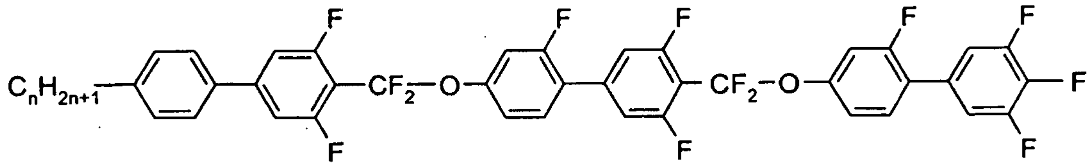

**PUQGUQGU-n-F = PU[QGU]2-n-F**

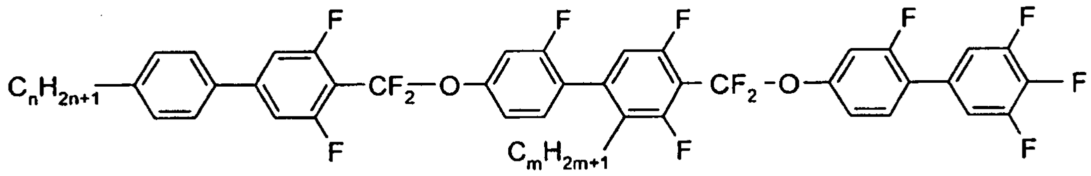

**PUQGU(m)QGU-n-F = PU[QGU]2(m)-n-F**

Beispiele für Verbindungen der Komponente C

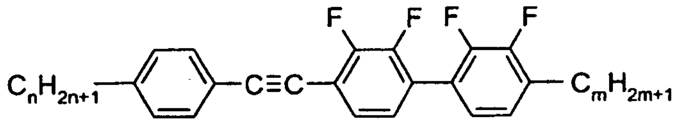

**PTYY-n-m**

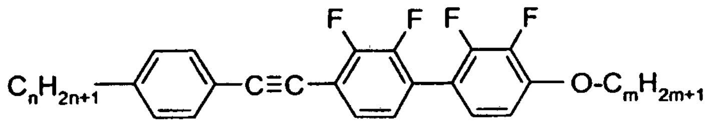

**PTYY-n-Om**

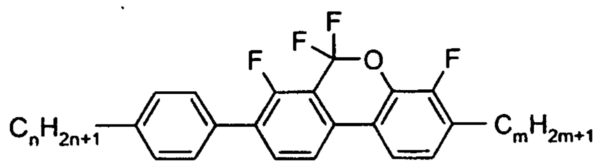

**PfX-n-m**

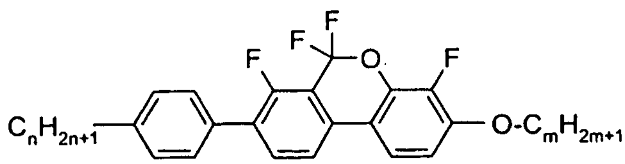

**PfX-n-Om**

Beispiele für Verbindungen der Komponente E

Verbindungen mit drei 6-gliedrigen Ringen

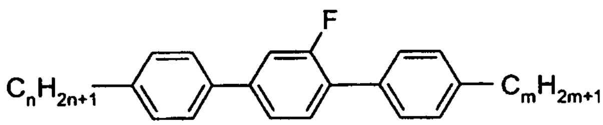

**PGP-n-m**

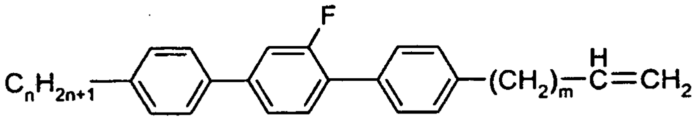

**PGP-n-mV**

(fortgesetzt)

Beispiele für Verbindungen der Komponente E

Verbindungen mit drei 6-gliedrigen Ringen

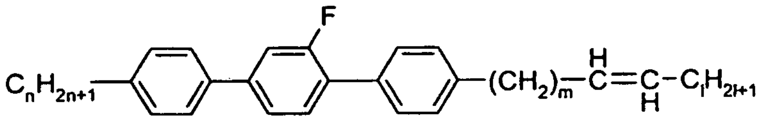

**PGP-n-mVI**

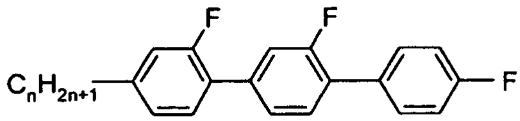

**GGP-n-F**

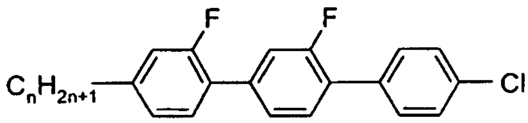

**GGP-n-CL**

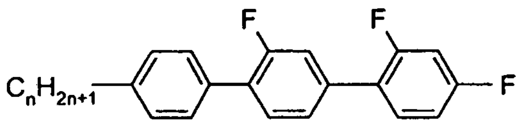

**PGIGI-n-F**

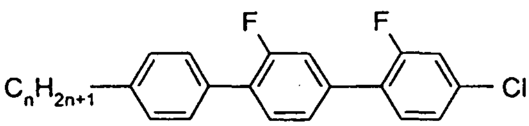

**PGIGI-n-CL**

Verbindungen mit vier 6-gliedrigen Ringen

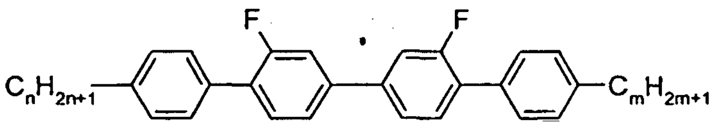

**PGIGP-n-m**

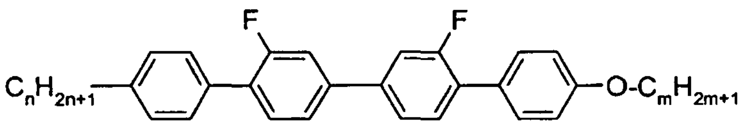

**PGIGP-n-Om**

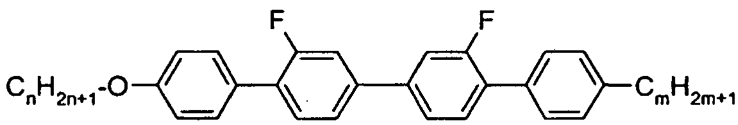

**PGIGP-nO-m**

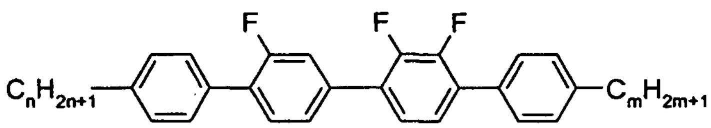

**PGIYP-n-m**

(fortgesetzt)

Beispielstrukturen eingesetzter polarer Verbindungen:

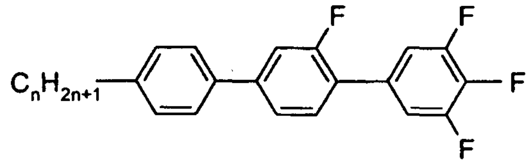

**PGU-n-F**

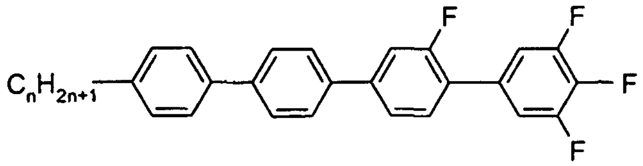

**PPGU-n-F**

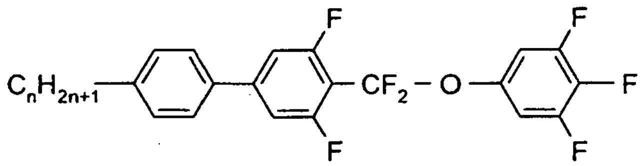

**PUQU-n-F**

Beispielstrukturen weiterer bevorzugt eingesetzter neutraler Verbindungen:

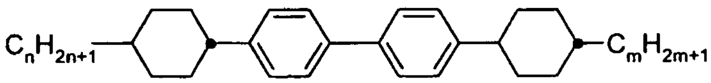

**CPPC-n-m**

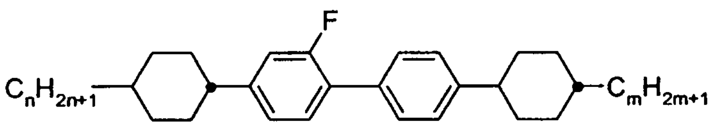

**CGPC-n-m**

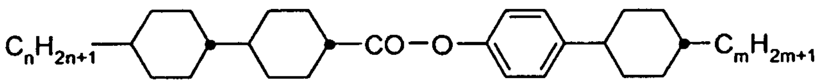

**CCZPC-n-m**

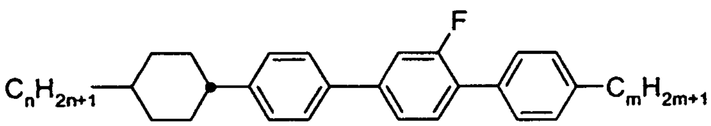

**CPGP-n-m**

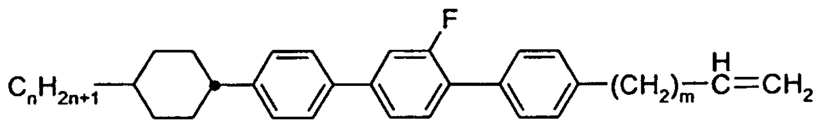

**CPGP-n-mV**

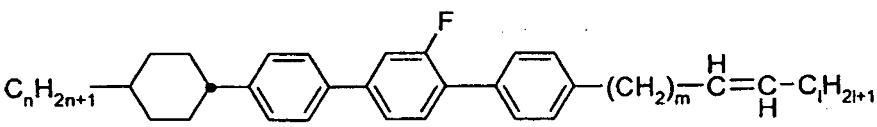

**CPGP-n-mVI**

(fortgesetzt)

Beispielstrukturen weiterer eingesetzter polarer Verbindungen:

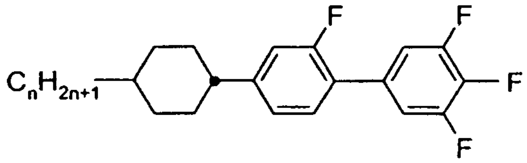

**CGU-n-F**

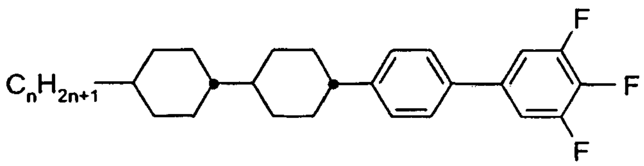

**CCPU-n-F**

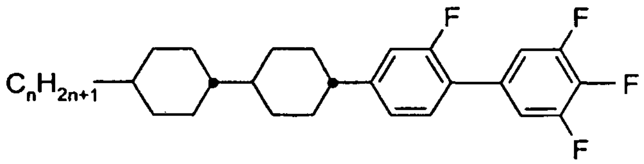

**CCGU-n-F**

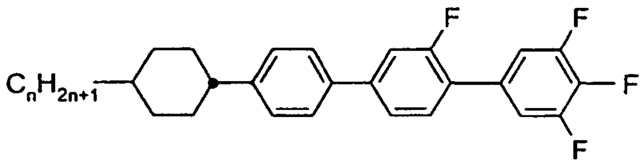

**CPGU-n-F**

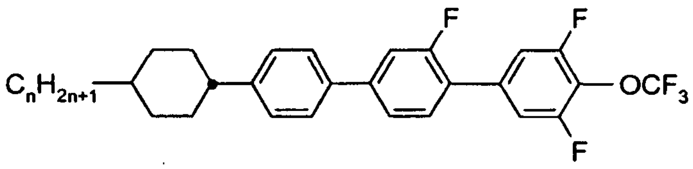

**CPGU-n-OT**

In der folgenden Tabelle, Tabelle E, sind Beispielverbindungen zusammengestellt, die in den mesogenen Medien gemäß der vorliegenden Erfindung als Stabilisator verwendet werden können. Die Gesamtkonzentration dieser bzw. ähnlicher Verbindungen in den Medien beträgt bevorzugt 5 % oder weniger.

## Tabelle E

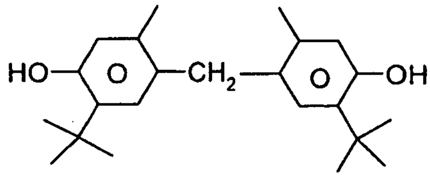

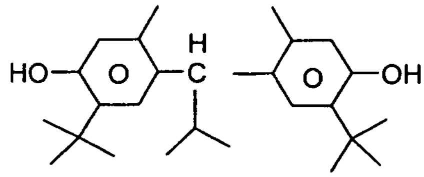

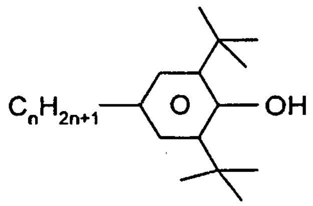

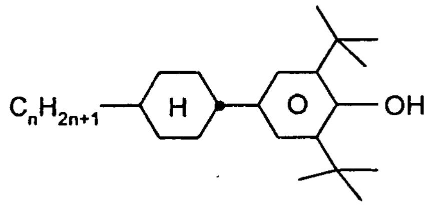

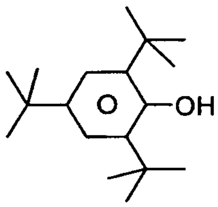

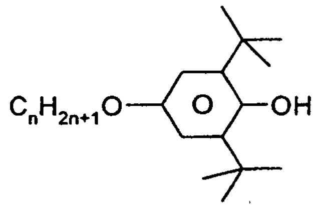

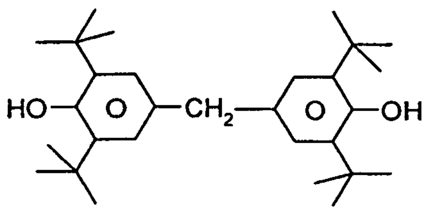

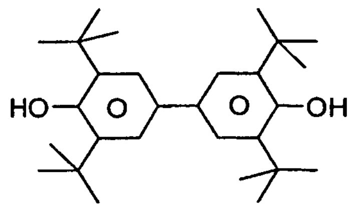

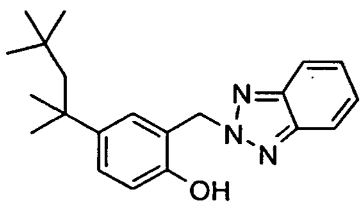

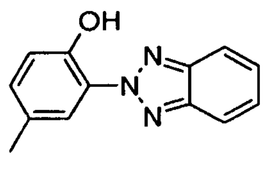

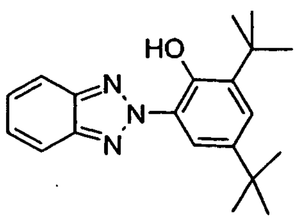

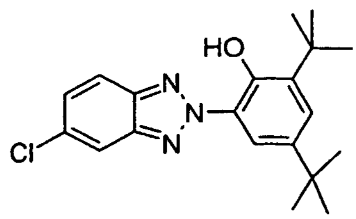

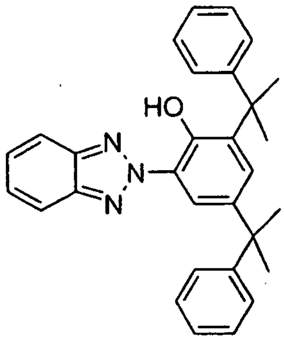

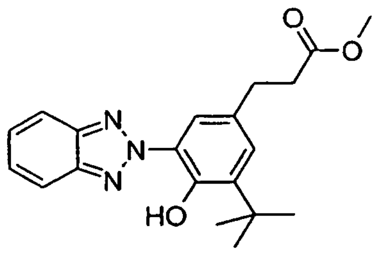

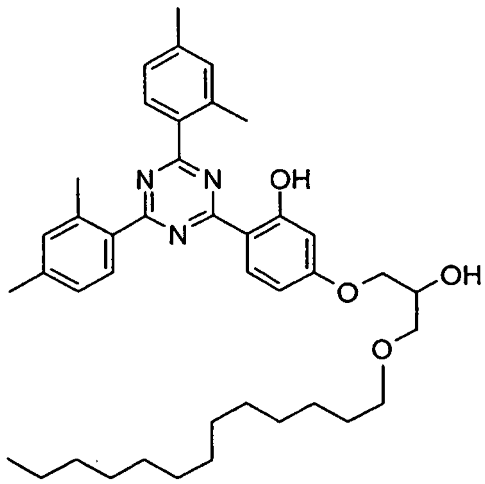

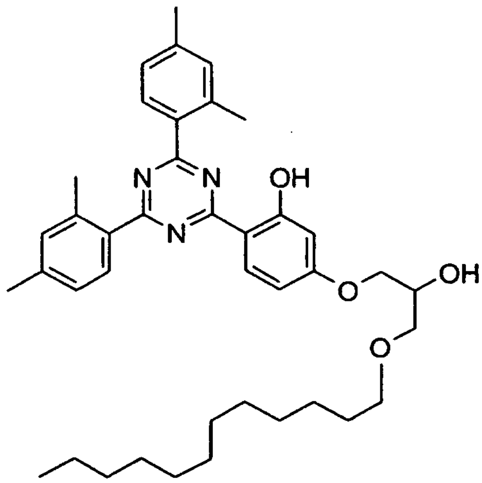

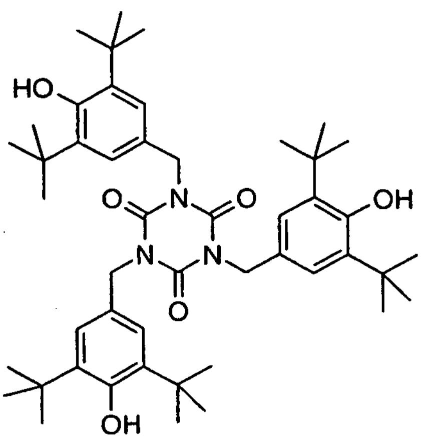

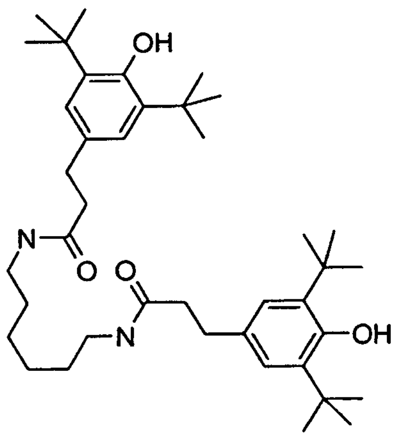

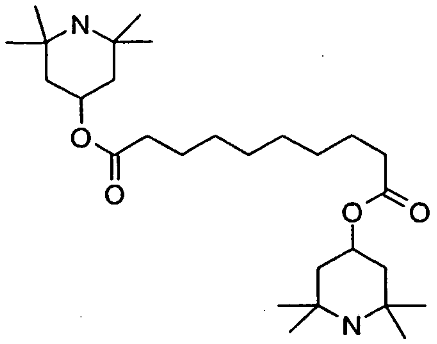

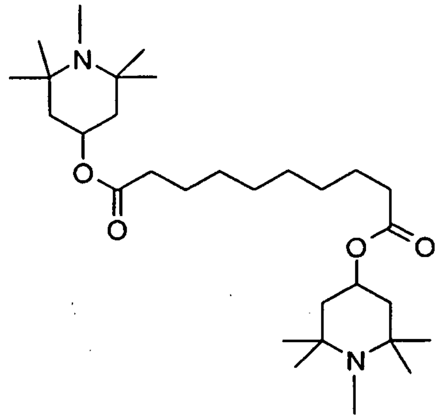

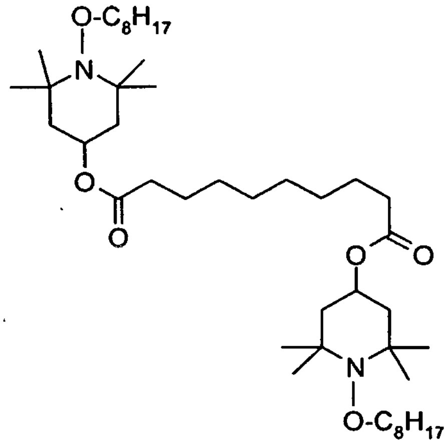

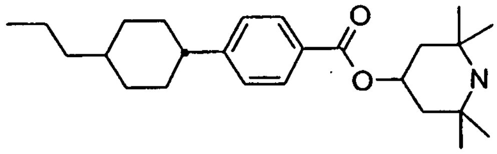

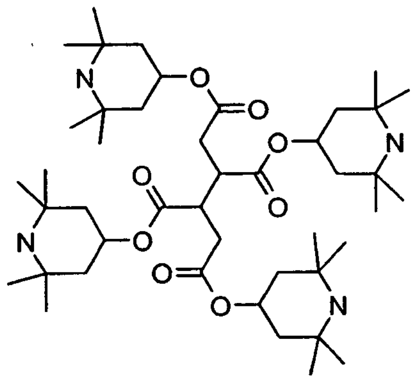

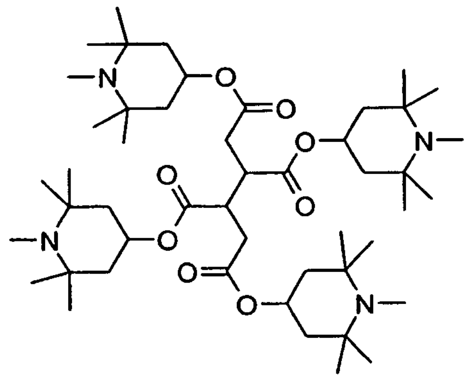

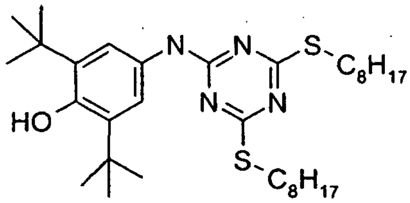

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen

Medien gemäß der vorliegenden Erfindung vorzugsweise als chirale Dotierstoffe verwendet werden können.

**Tabelle F**

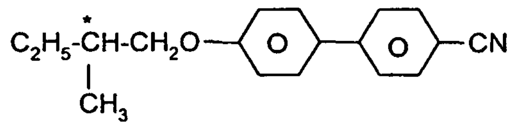

**C 15**

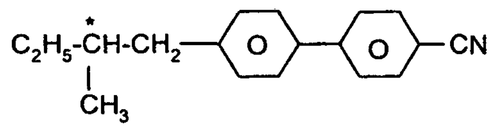

**CB 15**

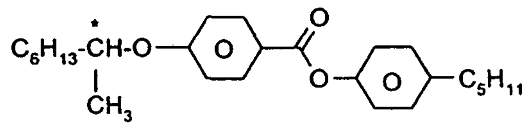

**CM 21**

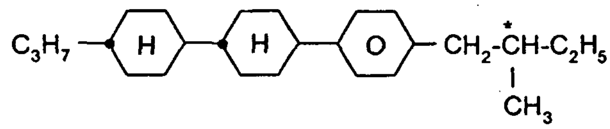

**CM 44**

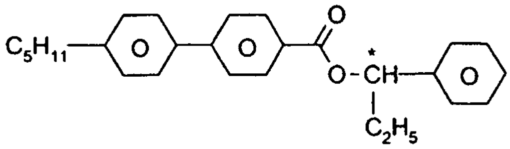

**CM 45**

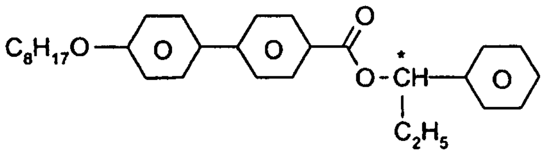

**CM 47**

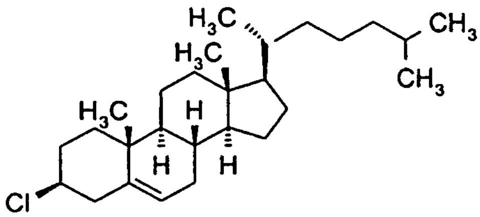

**CC**

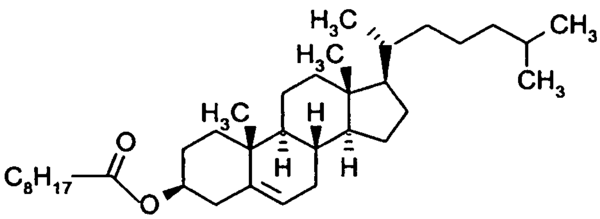

**CN**

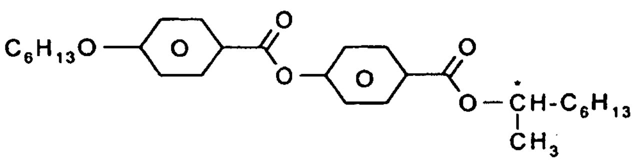

**R/S-811**

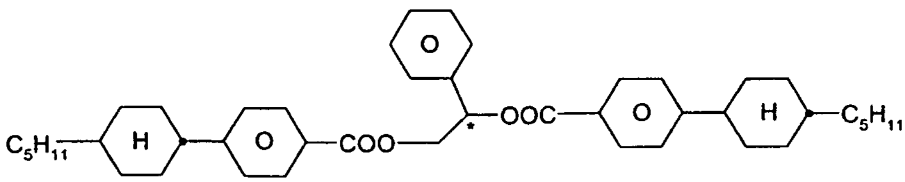

**R/S-1011**

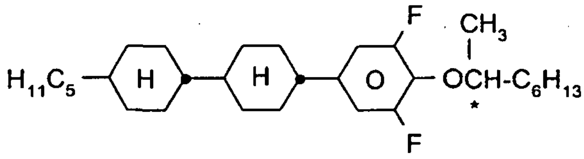

**R/S-2011**

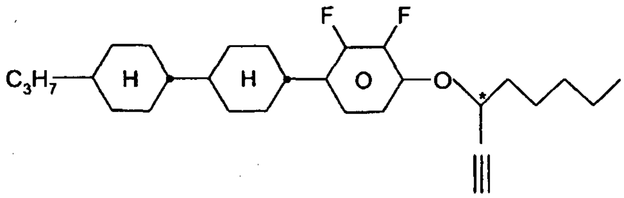

**R/S-3011**

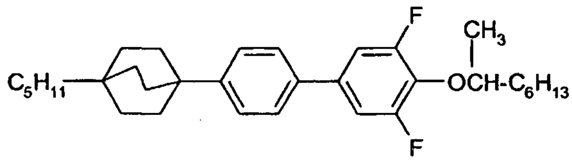

**R/S-4011**

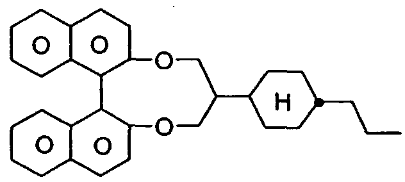

**R/S-5011**

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise

- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

Beispiele

Die folgenden Beispiele erläutern die vorliegende Erfindung, ohne sie in irgendeiner Weise zu beschränken. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Beispiel 1

Es wird eine flüssigkristalline Substanz mit der Kurzbezeichnung PTP(2)TP-6-3 nach Hsu, C. S. Shyu, K. F., Chuang, Y. Y. and Wu, S.-T., Liq. Cryst., 27 (2), (2000), p. 283-287 hergestellt und bezüglich ihrer physikalischen Eigenschaften, insbesondere im $\mu$-Wellenbereich, untersucht. Die Verbindung hat eine nematische Phase und einen Klärpunkt (T(N,I)) von 114,5°C. Weitere physikalische Eigenschaften bei 20°C sind: $n_e$(589,3 nm) = 1,8563; $\Delta$n(589,3

nm) = 0,3250; $\varepsilon_{||}$(1 kHz)) = ; $\Delta\varepsilon$(1 kHz) und $\gamma_1$ = 2.100 mPa·s. Die Verbindung eignet sich für Anwendungen im Mikrowellenbereich, insbesondere für Phasenschieber. Zum Vergleich erhält man mit der Verbindung 4'-Pentyl-4-cyanobiphenyl (auch 5CB oder K15 genannt, Merck KGaA) bei 20°C.

Tabelle 1 a: Eigenschaften der Verbindung PTP(2)TP-6-3 bei 30 GHz

| T/°C | $\varepsilon_{r,\|\|}$ | $\varepsilon_{r,\perp}$ | $\tau$ | tan $\delta_{\varepsilon,r\|\|}$ | tan $\delta_{\varepsilon,r,\perp}$ | $\eta$ |
|---|---|---|---|---|---|---|
| 20 | 3,22 | 2,44 | 0,242 | 0,0018 | 0,0064 | 37,9 |

Tabelle 1b: Eigenschaften der Verbindung K15 bei 30 GHz

| T/°C | $\varepsilon_{r,\|\|}$ | $\varepsilon_{r,\perp}$ | $\tau$ | tan $\delta_{\varepsilon,r,\|\|}$ | tan $\delta_{\varepsilon,r,\perp}$ | $\eta$ |
|---|---|---|---|---|---|---|
| 20 | 2,87 | 2,55 | 0,110 | 0,0114 | 0,026 | 4,3 |

Tabelle 2: Vergleich der Eigenschaften der verschiedenen Beispiele bei 30 GHz bei 20°C

| Beispiel | Flüssigkristall | $\varepsilon_{r,\|\|}$ | $\varepsilon_{r,\perp}$ | $\tau$ | tan $\delta_{\varepsilon r,Max.}$ | $\eta$ |
|---|---|---|---|---|---|---|
| Vergleich | K15 | 2,87 | 2,55 | 0,110 | 0,0262 | 4,3 |
| 1 | P2-6-3* | 3,22 | 2,44 | 0,242 | 0,0064 | 37,9 |
| 2 | M-1 | n.z.b. | n.z.b. | n.z.b. | n.z.b. | n.z.b. |
| 3 | M-2 | 3,21 | 2,39 | 0,256 | 0,0070 | 35,5 |
| 4 | M-3 | 3,20 | 2,45 | 0,234 | 0,0068 | 34,5 |
| 5 | M-4 | n.z.b. | n.z.b. | n.z.b. | n.z.b. | n.z.b. |
| 6 | M-5 | n.z.b. | n.z.b. | n.z.b. | n.z.b. | n.z.b. |
| 7 | M-6 | 3,26 | 2,46 | 0,245 | 0,0069 | 35,6 |
| 8 | M-7 | 3,20 | 2,42 | 0,244 | 0,0082 | 30,0 |
| 9 | M-8 | 3,24 | 2,45 | 0,244 | 0,0083 | 29,4 |
| 10 | M-9 | n.z.b. | n.z.b. | n.z.b. | n.z.b. | n.z.b. |
| 11 | M-10 | n.z.b. | n.z.b. | n.z.b. | n.z.b. | n.z.b. |
| 12 | M-11 | 3,19 | 2,42 | 0,241 | 0,0075 | 33,0 |
| 13 | M-12 | n.z.b. | n.z.b. | n.z.b. | n.z.b. | n.z.b. |
| 14 | M-13 | n.z.b. | n.z.b. | n.z.b. | n.z.b. | n.z.b. |
| 15 | M-14 | n.z.b. | n.z.b. | n.z.b. | n.z.b. | n.z.b. |
| 16 | M-15 | n.z.b. | n.z.b. | n.z.b. | n.z.b. | n.z.b. |
| 17 | M-16 | n.z.b. | n.z.b. | n.z.b. | n.z.b. | n.z.b. |
| 18 | M-17 | n.z.b. | n.z.b. | n.z.b. | n.z.b. | n.z.b. |
| 19 | M-18 | n.z.b. | n.z.b. | n.z.b. | n.z.b. | n.z.b. |
| 20 | M-19 | | | 0,224 | | 18,3 |
| 21 | M-20 | n.z.b. | n.z.b. | n.z.b. | n.z.b. | n.z.b. |
| 22 | M-21 | n.z.b. | n.z.b. | n.z.b. | n.z.b. | n.z.b. |
| 23 | M-22 | n:z.b. | n.z.b. | n.z.b. | n.z.b. | n.z.b. |
| Bemerkungen: *) P2-6-3: PTP(2)TP-6-3 und<br>n.z.b.: noch zu bestimmen. | | | | | | |

Beispiel 2

Es wird eine Flüssigkristallmischung M-1 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 123,0 °C |
| Nr. | Abkürzung | | | |
| 1 | PTP(2)TP-3-3 | 25,0 | $\varepsilon_{\|\|}$ (20°C, 1 kHz) | = 3,4 |
| 2 | PTP(2)TP-4-3 | 25,0 | $\Delta\varepsilon$ (20°C, 1 kHz) | = 0,8 |
| 3 | PTP(2)TP-6-3 | 50,0 | | |
| Σ | | 100,0 | | |
| Bemerkung: Die Verbindungen PTP(2)TP-3-3 und PTP(2)-4-3 werden analog zur Verbindung des Beispiel 1 hergestellt. | | | | |

Diese Mischung eignet sich sehr gut für Anwendungen im Mikrowellenbereich, insbesondere für Phasenschieber.

Beispiel 3

Es wird eine Flüssigkristallmischung M-2 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 129,5 °C |
| Nr. | Abkürzung | | | |
| 1 | PTP(1)TP-3-6 | 11,0 | $n_e$ (20°C, 589,3 nm) | = 1,8721 |
| 2 | PTP(1)TP-3-O5 | 5,0 | $\Delta n$ (20°C, 589,3 nm) | = 0,3430 |
| 3 | PTP(2)TP-3-6 | 15,0 | | |
| 4 | PTP(2)TP-6-3 | 63,0 | $\varepsilon_{\|\|}$ (20°C, 1 kHz) | = 3,3 |
| 5 | PTP(2)TP-3-O5 | 6,0 | $\Delta\varepsilon$ (20°C, 1 kHz) | = 0,7 |
| Σ | | 100,0 | | |

Diese Mischung eignet sich sehr gut für Anwendungen im Mikrowellenbereich, insbesondere für Phasenschieber.

Tabelle 3: Eigenschaften der Mischung M-2 bei 30 GHz

| T/°C | $\varepsilon_{r,\|\|}$ | $\varepsilon_{r,\perp}$ | $\tau$ | tan $\delta_{\varepsilon,\rho\|\|}$ | tan $\delta_{\varepsilon,r,\perp}$ | $\eta$ |
|---|---|---|---|---|---|---|
| 20 | 3,21 | 2,39 | 0,256 | 0,0020 | 0,0070 | 35,5 |

Beispiel 4

Es wird eine Flüssigkristallmischung M-3 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 112,5 °C |
| Nr. | Abkürzung | | | |
| 1 | PTP(2)TP-3-3 | 40,0 | $\varepsilon_{\|\|}$ (20°C, 1 kHz) | = 3,5 |

(fortgesetzt)

| Zusammensetzung | | | Physikalische Eigenschaften |
|---|---|---|---|
| 2 | PTP(2)TP-6-3 | 20,0 | Δε (20°C, 1 kHz) = 0,8 |
| 3 | PTP(2)TP-3-O5 | 20,0 | |
| 4 | PTP(c6)TP-3-6 | 20.0 | |
| Σ | | 100,0 | |
| Bemerkung: Die Verbindungen werden alle analog zur Verbindung des Beispiels 1 hergestellt. Die Verbindung PTP(c6)TP-3-6 hat eine Glasübergangstemperatur ($T_9$) von -23°C. | | | |

Diese Mischung eignet sich sehr gut für Anwendungen im Mikrowellenbereich, insbesondere für Phasenschieber.

Tabelle 4: Eigenschaften, der Mischung M-3 bei 30 GHz

| T/°C | $\varepsilon_{r,\|\|}$ | $\varepsilon_{r,\perp}$ | $\tau$ | tan $\delta_{\varepsilon,r,\|\|}$ | tan $\delta_{\varepsilon,r,\perp}$ | $\eta$ |
|---|---|---|---|---|---|---|
| 20 | 3,20 | 2,45 | 0,234 | 0,0023 | 0,0068 | 34,5 |

Beispiel 5

Es wird eine Flüssigkristallmischung M-4 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | T(N,I) = n.z.b. °C |
| Nr. | Abkürzung | | |
| 1 | PTP(2)TP-3-3 | 40,0 | $\varepsilon_{\|\|}$ (20°C, 1 kHz) = n.z.b. |
| 2 | PTP(2)TP-6-3 | 20,0 | Δε (20°C, 1 kHz) = n.z.b. |
| 3 | PTP(2)TP-3-O5 | 20,0 | |
| 4 | PTP(c3)TP-4-4 | 20,0 | |
| Σ | | 100,0 | |
| Bemerkungen: n.z.b.: noch zu bestimmen. Die Verbindungen werden alle analog zur Verbindung des Beispiels 1 hergestellt. Die Verbindung PTP(c3)TP-4-4 hat eine nematische Phase und einen Klärpunkt von 84,5°C. | | | |

Diese Mischung eignet sich sehr gut für Anwendungen im Mikrowellenbereich, insbesondere für Phasenschieber.

Beispiel 6

Es wird eine Flüssigkristallmischung M-5 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | T(N,I) = n.z.b. °C |
| Nr. | Abkürzung | | |
| 1 | PTP(2)TP-3-3 | 40,0 | $\varepsilon_{\|\|}$ (20°C, 1 kHz) = n.z.b. |
| 2 | PTP(2)TP-6-3 | 20,0 | Δε (20°C, 1 kHz) = n.z.b. |
| 3 | PTP(2)TP-3-05 | 20,0 | |

(fortgesetzt)

| Zusammensetzung | | | Physikalische Eigenschaften |
|---|---|---|---|
| 4<br>Σ | PTP(c4)TP-4-4 | 20,0<br>100,0 | |
| Bemerkungen: n.z.b.: noch zu bestimmen. Die Verbindungen werden alle analog zur Verbindung des Beispiel 1 hergestellt. Die Verbindung PTP(c4)TP-4-4 hat eine nematische Phase und einen Klärpunkt von 70,1°C. | | | |

Diese Mischung eignet sich sehr gut für Anwendungen im Mikrowellenbereich, insbesondere für Phasenschieber.

Beispiel 7

Es wird eine Flüssigkristallmischung M-6 mit der Zusammensetzung und den Eigenschaften wie in der folgenden Tabelle angegeben hergestellt.

| Zusammensetzung | | | Physikalische Eigenschaften | |
|---|---|---|---|---|
| Verbidung | | | T(N,I) | = 105,0 °C |
| Nr. | Abkürzung | | | |
| 1 | PTP(2)TP-2-2 | 15,0 | $\varepsilon_{\|\|}$ (20°C, 1 kHz) | = 3,5 |
| 2 | PTP(2)TP-3-3 | 20,0 | $\Delta\varepsilon$ (20°C, 1 kHz) | = 0,8 |
| 3 | PTP(2)TP-6-3 | 30,0 | | |
| 4 | PTP(2)TP-3-O5 | 15,0 | | |
| 5 | PTP(c6)TP-3-6 | 20,0 | | |
| Σ | | 100,0 | | |

Diese Mischung eignet sich sehr gut für Anwendungen im Mikrowellenbereich, insbesondere für Phasenschieber.

Tabelle 5: Eigenschaften der Mischung M-6 bei 30 GHz

| T/°C | $\varepsilon_{r,\|\|}$ | $\varepsilon_{r,\perp}$ | $\tau$ | tan $\delta_{\varepsilon, \rho,\|\|}$ | tan $\delta_{\varepsilon, \rho,\perp}$ | $\eta$ |
|---|---|---|---|---|---|---|
| 20 | 3,26 | 2,46 | 0,245 | 0,0020 | 0,0069 | 35,6 |

Beispiel 8

Es wird eine Flüssigkristallmischung M-7 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 124,5 °C |
| Nr. | Abkürzung | | | |
| 1 | PTP(1)TP-3-6 | 15,0 | $\varepsilon_{\|\|}$ (20°C, 1 kHz) | = 7,4 |
| 2 | PTP(2)TP-3-6 | 10,0 | $\Delta\varepsilon$ (20°C, 1 kHz) | = 4,5 |
| 3 | PTP(2)TP-6-3 | 55,0 | | |
| 4 | PTP(2)TP-3-O5 | 5,0 | $\gamma_1$ (20°C) | = 1.637 mPa·s |
| 5 | PGUQU-3-F | 5,0 | | |
| 6 | PGUQU-4-F | 5,0 | | |
| 7 | PGUQU-5-F | 5,0 | | |

(fortgesetzt)

| Zusammensetzung | | | Physikalische Eigenschaften |
|---|---|---|---|
| Σ | | 100,0 | |

Diese Mischung eignet sich sehr gut für Anwendungen im Mikrowellenbereich, insbesondere für Phasenschieber.

Tabelle 6: Eigenschaften der Mischung M-7 bei 30 GHz

| T/°C | $\varepsilon_{r,\|\|}$ | $\varepsilon_{r,\perp}$ | $\tau$ | tan $\delta_{\varepsilon, \rho,\|\|}$ | tan $\delta_{\varepsilon, \rho,\perp}$ | $\eta$ |
|---|---|---|---|---|---|---|
| 10,0 | 3,21 | 2,41 | 0.248 | 0,0021 | 0,0070 | 35,3 |
| 20,0 | 3,20 | 2,42 | 0,244 | 0,0024 | 0,0082 | 30,0 |
| 30,0 | 3,19 | 2,42 | 0,240 | 0,0027 | 0,0093 | 26,0 |
| 40,0 | 3,17 | 2,42 | 0,236 | 0,0030 | 0,0104 | 22,6 |
| 50,0 | 3,15 | 2,42 | 0,231 | 0,0035 | 0,0115 | 20,1 |

Beispiel 9

Es wird eine Flüssigkristallmischung M-8 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 108,5 °C |
| Nr. | Abkürzung | | | |
| 1 | PTP(1)TP-6-3 | 17,2 | $\varepsilon_{\|\|}$ (20°C, 1 kHz) | = 7,0 |
| 2 | PTP(2)TP-3-3 | 34,4 | $\Delta\varepsilon$ (20°C, 1 kHz) | = 4,0 |
| 3 | PTP(2)TP-3-O5 | 17,2 | | |
| 4 | PTP(c6)TP-3-6 | 17,2 | $\gamma_1$ (20°C) | = 1.126 mPa · s |
| 5 | PGUQU-3-F | 7,0 | | |
| 6 | PGUQU-5-F | 7,0 | | |
| Σ | | 100,0 | | |

Tabelle 7: Eigenschaften der Mischung M-8 bei 30 GHz

| T/°C | $\varepsilon_{r,\|\|}$ | $\varepsilon_{r,\perp}$ | $\tau$ | tan $\delta_{\varepsilon, \rho,\|\|}$ | tan $\delta_{\varepsilon, \rho,\perp}$ | $\eta$ |
|---|---|---|---|---|---|---|
| 20 | 3,24 | 2,45 | 0,244 | 0,0024 | 0,0083 | 29,4 |

Beispiel 10

Es wird eine Flüssigkristallmischung M-9 mit der Zusammensetzung und den Eigenschaften wie in der folgenden Tabelle angegeben hergestellt.

| Zusammensetzung | | | Physikalische Eigenschaften | |
|---|---|---|---|---|
| Verbidung | | | T(N,I) | = n.z.b. °C |
| Nr. | Abkürzung | | | |
| 1 | PTP(1)TP-6-3 | 17,2 | $\varepsilon_{\|\|}$ (20°C, 1 kHz) | = n.z.b. |
| 2 | PTP(2)TP-3-3 | 34,4 | $\Delta\varepsilon$ (20°C, 1 kHz) | = n.z.b. |
| 3 | PTP(2)TP-3-O5 | 17,2 | | |

(fortgesetzt)

| Zusammensetzung | | | Physikalische Eigenschaften |
|---|---|---|---|
| 4 | PTP(c3)TP-4-4 | 17,2 | |
| 5 | PGUQU-3-F | 7,0 | |
| 6 | PGUQU-5-F | 7,0 | |
| Σ | | 100,0 | |
| Bemerkung: n.z.b.: noch zu bestimmen. | | | |

Beispiel 11

Es wird eine Flüssigkristallmischung M-10 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | T(N,I) = n.z.b. °C |
| Nr. | Abkürzung | | |
| 1 | PTP(1)TP-6-3 | 17,2 | $\varepsilon_{\|\|}$ (20°C, 1 kHz) = n.z.b. |
| 2 | PTP(2)TP-3-3 | 34,4 | $\Delta\varepsilon$ (20°C, 1 kHz) = n.z.b. |
| 3 | PTP(2)TP-3-O5 | 17,2 | |
| 4 | PTP(c4)TP-4-4 | 17,2 | |
| 5 | PGUQU-3-F | 7,0 | |
| 6 | PGUQU-5-F | 7,0 | |
| Σ | | 100,0 | |
| Bemerkung: n.z.b.: noch zu bestimmen. | | | |

Beispiel 12

Es wird eine Flüssigkristallmischung M-11 mit der Zusammensetzung und den Eigenschaften wie in der folgenden Tabelle angegeben hergestellt.

| Zusammensetzung | | | Physikalische Eigenschaften |
|---|---|---|---|
| Verbindung | | | T(N,I) = 139,5 °C |
| Nr. | Abkürzung | | |
| 1 | PTP(1)TP-3-6 | 15,0 | $\varepsilon_{\|\|}$ (20°C, 1 kHz) = 5,0 |
| 2 | PTP(2)TP-3-6 | 20,0 | $\Delta\varepsilon$ (20°C, 1 kHz) = 2,0 |
| 3 | PTP(2)TP-6-3 | 45,0 | |
| 4 | PTP(2)TP-3-O5 | 10,0 | |
| 5 | CPWZG-3-N | 10,0 | |
| Σ | | 100,0 | |
| Bemerkungen: CPWZG-3-N: (Phasen: K 104 SA (79) N 169,4 I) | | | |

Diese Mischung eignet sich sehr gut für Anwendungen im Mikrowellenbereich, insbesondere für Phasenschieber.

Tabelle 8: Eigenschaften der Mischung M-11 bei 30 GHz

| T/°C | $\varepsilon_{r,\|\|}$ | $\varepsilon_{r,\perp}$ | $\tau$ | tan $\delta_{\varepsilon,\rho,\|\|}$ | tan $\delta_{\varepsilon,\rho,\perp}$ | $\eta$ |
|---|---|---|---|---|---|---|
| 20 | 3,19 | 2,42 | 0,241 | 0,0020 | 0,0075 | 33,0 |

Beispiel 13

Es wird eine Flüssigkristallmischung M-12 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 141,5 °C |
| Nr. | Abkürzung | | | |
| 1 | PTP(2)TP-6-3 | 60,0 | $\varepsilon_{\|\|}$ (20°C, 1 kHz) | = 6,0 |
| 2 | PTYY-3-O2 | 10,0 | $\Delta\varepsilon$ (20°C, 1 kHz) | = -0,5 |
| 3 | PTYY-3-O3 | 15,0 | | |
| 4 | PTYY-3-O4 | 15,0 | | |
| $\Sigma$ | | 100,0 | | |

Diese Mischung eignet sich sehr gut für Anwendungen im Mikrowellenbereich, insbesondere für Phasenschieber.

Beispiel 14

Es wird eine Flüssigkristallmischung M-13 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 137,5 °C |
| Nr. | Abkürzung | | | |
| 1 | PTP(2)TP-6-3 | 75,0 | $\varepsilon_{\|\|}$ (20°C, 1 kHz) | = 5,2 |
| 2 | PfX-5-O4 | 25,0 | $\Delta\varepsilon$ (20°C, 1 kHz) | = -0,5 |
| $\Sigma$ | | 100,0 | | |

Diese Mischung eignet sich sehr gut für Anwendungen im Mikrowellenbereich, insbesondere für Phasenschieber.

Beispiel 15

Es wird eine Flüssigkristallmischung M-14 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = n.z.b. °C |
| Nr. | Abkürzung | | | |
| 1 | PTP(1)TP-3-6 | 10,0 | $\varepsilon_{\|\|}$ (20°C, 1 kHz) | = n.z.b. |
| 2 | PTP(2)TP-3-6 | 15,0 | $\Delta\varepsilon$ (20°C, 1 kHz) | = n.z.b. |
| 3 | PTP(2)TP-6-3 | 35,0 | | |
| 4 | PTYY-3-O2 | 5,0 | | |
| 5 | PTYY-3-O3 | 10,0 | | |
| 6 | PTYY-3-O4 | 10,0 | | |
| 7 | PfX-5-O4 | 15,0 | | |
| $\Sigma$ | | 100,0 | | |
| Bemerkung: n.z.b.: noch zu bestimmen. | | | | |

Diese Mischung eignet sich sehr gut für Anwendungen im Mikrowellenbereich, insbesondere für Phasenschieber.

Beispiel 16

Es wird eine Flüssigkristallmischung M-15 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = n.z.b. °C |
| Nr. | Abkürzung | | | |
| 1 | PTP(2)TP-3-1 | 10,0 | $\varepsilon_{\|\|}$ (20°C, 1 kHz) | = n.z.b. |
| 2 | PTP(2)TP-6-3 | 63,0 | $\Delta\varepsilon$ (20°C, 1 kHz) | = n.z.b. |
| 3 | PTP(2)TP-3-O5 | 10,0 | | |
| 4 | PGUQU-3-F | 5,0 | | |
| 5 | $PU[QGU]_2$-3-F | 5,0 | | |
| 6 | $PU[QGU]_2$-5-F | 7,0 | | |
| Σ | | 100,0 | | |
| Bemerkungen: $PU[QGU]_2$-5-F: PUQGUQGU-5-F (Phasen: K 86 N 236,4 I) $PU[QGU]_2^{(3)}$-5-F: PUQGU(3)QGU-5-F (Phasen: K 80°C $S_A$ (39) N 100,6 I) und n.z.b.: noch zu bestimmen. | | | | |

Beispiel 17

Es wird eine Flüssigkristallmischung M-16 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 118,5 °C |
| Nr. | Abkürzung | | | |
| 1 | PTP(2)TP-6-3 | 85,0 | $\varepsilon_{\|\|}$ (20°C, 1 kHz) | = 5,7 |
| 2 | $PU[QGU]_2$-5-F | 10,0 | $\Delta\varepsilon$ (20°C, 1 kHz) | = 2,8 |
| 3 | $PU[QGU]_2^{(3)}$-5-F | 5,0 | | |
| Σ | | 100,0 | $k_1$ (20°C) | = 13,9 |
| | | | $k_3$ (20°C) | = 35,7 |
| Bemerkungen: $PU[QGU]_2$-3-F: PUQGUQGU-3-F , $PU[QGU]_2$-5-F: PUQGUQGU-5-F. | | | | |

Beispiel 18

Es wird eine Flüssigkristallmischung M-17 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 152,0 °C |
| Nr. | Abkürzung | | T(S,N) | < - 20 °C |
| 1 | PTP(c3)TP-4-4 | 15,0 | | |
| 2 | GGP-3-CL | 10,0 | $\varepsilon_{\|\|}$ (20°C, 1 kHz) | = 7,6 |
| 3 | GGP-5-CL | 20,0 | $\Delta\varepsilon$ (20°C, 1 kHz) | = 4,1 |

(fortgesetzt)

| Zusammensetzung | | | Physikalische Eigenschaften |
|---|---|---|---|
| 4 | PPTUI-3-2 | 20,0 | |
| 5 | PPTUI-3-4 | 20,0 | |
| 6 | PPTUI-4-4 | 5,0 | |
| 7 | CPGP-5-2 | 5,0 | |
| 8 | CPGP-5-2 | 5,0 | |
| Σ | | 100,0 | |

Diese Mischung eignet sich sehr gut für Anwendungen im Mikrowellenbereich, insbesondere für Phasenschieber.

Beispiel 19

Es wird eine Flüssigkristallmischung M-18 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 145,5 °C |
| Nr. | Abkürzung | | T(C,I) | = - 10 °C |
| 1 | PTP(c3)TP-4-4 | 20,0 | | |
| 2 | GGP-3-CL | 10,0 | $\varepsilon_{\|\|}$ (20°C, 1 kHz) | = 7,0 |
| 3 | GGP-5-CL | 20,0 | $\Delta\varepsilon$ (20°C, 1 kHz) | = 4,0 |
| 4 | PPTUI-3-4 | 20,0 | | |
| 5 | PPTUI-4-4 | 20,0 | $\gamma_1$ (20°C) | = 1.237 mPa · s |
| 6 | CPGP-5-2 | 5,0 | | |
| 7 | CPGP-5-2 | 5,0 | $k_1$ (20°C) | = 15,9 |
| Σ | | 100,0 | $k_3$ (20°C) | = 27,5 |
| | | | $V_0$ (20°C) | = 2,11 V |

Diese Mischung eignet sich sehr gut für Anwendungen im Mikrowellenbereich, insbesondere für Phasenschieber.

Tabelle 9: Eigenschaften der Mischung M-18 bei 30 GHz

| T/°C | τ | η |
|---|---|---|
| 10,0 | 0,227 | 22,0 |
| 20,0 | 0,224 | 18,3 |
| 30,0 | 0,220 | 15,2 |
| 40,0 | 0,215 | 13,4 |
| 50,0 | 0,211 | 11,7 |
| 60,0 | 0,207 | 10,4 |
| 70,0 | 0,202 | 9,1 |
| 80,0 | 0,196 | 8,0 |
| 90,0 | 0,190 | 7,2 |
| 92,3 | 0,188 | 7,0 |

Beispiel 20

Es wird eine Flüssigkristallmischung M-19 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 113,5 °C |
| Nr. | Abkürzung | | | |
| 1 | PTP(2)TP-6-3 | 20,0 | $\varepsilon_{\|\|}$ (20°C, 1 kHz) | = n.z.b. |
| 2 | PTP(c3)TP-4-4 | 5,0 | $\Delta\varepsilon$ (20°C, 1 kHz) | = n.z.b. |
| Σ | | 100,0 | | |
| Bemerkung: n.z.b.: noch zu bestimmen. | | | | |

Diese Mischung eignet sich sehr gut für Anwendungen im Mikrowellenbereich, insbesondere für Phasenschieber.

Beispiel 21

Es wird eine Flüssigkristallmischung M-20 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = n.z.b. °C |
| Nr. | Abkürzung | | | |
| 1 | PTP(2)TP-2-2 | 20,0 | $\varepsilon_{\|\|}$ (20°C, 1 kHz) | = n.z.b. |
| 2 | PTP(2)TP-3-3 | 30,0 | $\Delta\varepsilon$ (20°C, 1 kHz) | = n.z.b. |
| 3 | PTP(2)TP-6-3 | 10,0 | | |
| 4 | PTP(c6)TP-3-6 | 20,0 | | |
| 5 | PTP(2)TP-3-O5 | 20,0 | | |
| Σ | | 100,0 | | |
| Bemerkung: n.z.b.: noch zu bestimmen. | | | | |

Diese Mischung eignet sich sehr gut für Anwendungen im Mikrowellenbereich, insbesondere für Phasenschieber.

Beispiel 22

Es wird eine Flüssigkristallmischung M-21 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = n.z.b. °C |
| Nr. | Abkürzung | | | |
| 1 | PTP(2)TP-3-3 | 10,0 | $\varepsilon_{\|\|}$ (20°C, 1 kHz) | = n.z.b. |
| 2 | PTP(2)TP-3-6 | 10,0 | $\Delta\varepsilon$ (20°C, 1 kHz) | = n.z.b. |
| 3 | PTP(2)TP-4-3 | 10,0 | | |
| 4 | PTP(2)TP-6-3 | 70,0 | | |
| Σ | | 100,0 | | |
| Bemerkung: n.z.b.: noch zu bestimmen. | | | | |

Diese Mischung eignet sich sehr gut für Anwendungen im Mikrowellenbereich, insbesondere für Phasenschieber.

Beispiel 23

Es wird eine Flüssigkristallmischung M-22 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 123,0 °C |
| Nr. | Abkürzung | | | |
| 1 | PTP(2)TP-3-3 | 25,0 | $\varepsilon_{\|\|}$ (20°C, 1 kHz) | = 3,4 |
| 2 | PTP(2)TP-4-3 | 25,0 | $\Delta\varepsilon$ (20°C, 1 kHz) | = 0,8 |
| 3 | PTP(2)TP-6-3 | 50,0 | | |
| Σ | | 100,0 | | |

Diese Mischung eignet sich sehr gut für Anwendungen im Mikrowellenbereich, insbesondere für Phasenschieber.

## Patentansprüche

1. Bauteil für die Hochfrequenztechnik, bzw. für den Mikrowellenbereich und Millimeterwellenbereich des elektromagnetischen Spektrums ausgewählt aus der Gruppe der folgenden Bauteile: Funk-, Radiowellenantennenarrays und Mikrowellenantennenarrays oder Bauelement für die Hochfrequenztechnik, bzw. für den Mikrowellenbereich und Millimeterwellenbereich des elektromagnetischen Spektrums ausgewählt aus der Gruppe der folgenden Bauelemente: Phasenschieber, Varaktoren und "matching circuit adaptive filters", **dadurch gekennzeichnet, dass** es eine Flüssigkristallverbindung der Formel I oder ein Flüssigkristallmedium enthält, das seinerseits eine oder mehrere Verbindungen der Formel I enthält,

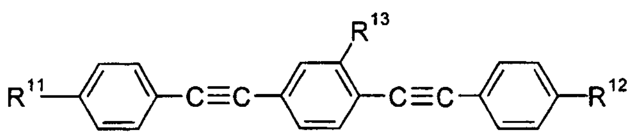

I

worin

$R^{11}$ bis $R^{13}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkycycloalkylalkyl oder Alkycycloalkenylalkyl) jeweils mit bis zu 15 C-Atomen.

2. Bauteil oder Bauelement nach Anspruch 1, **dadurch gekennzeichnet, dass** es eine Flüssigkristallverbindung enthält.

3. Bauteil oder Bauelement nach Anspruch 1, **dadurch gekennzeichnet, dass** es ein Flüssigkristallmedium enthält.

4. Bauteil oder Bauelement nach Anspruch 3, **dadurch gekennzeichnet, dass** das Flüssigkristallmedium neben einer Komponente A, die aus einer oder mehreren Verbindungen der in Anspruch 1 gegebenen Formel I besteht, zusätzlich eine oder Komponenten ausgewählt aus der Gruppe der folgenden Komponenten, Komponenten B bis E enthält

   - einer stark dielektrisch positiven Komponente, Komponenten B, die eine dielektrische Anisotropie von 10 oder mehr aufweist,
   - einer stark dielektrisch negativen Komponente, Komponente C, die eine dielektrische Anisotropie mit einem Betrag von 5 oder mehr aufweist,
   - einer Komponente, Komponente D, die eine dielektrische Anisotropie im Bereich von mehr als -5,0 und von

weniger als 10,0 aufweist und aus Verbindungen mit acht oder mehr fünf- oder sechsgliedrigen Ringen besteht und
- eine Komponente, Komponente E, die ebenfalls eine dielektrische Anisotropie im Bereich von mehr als -5,0 und von weniger als 10,0 aufweist und aus Verbindungen mit bis zu sieben fünf- oder sechsgliedrigen Ringen besteht.

5. Bauteil oder Bauelement nach Anspruch 4, **dadurch gekennzeichnet, dass** das Flüssigkristallmedium eine Komponente B enthält.

6. Bauteil oder Bauelement nach Anspruch 4, **dadurch gekennzeichnet, dass** das Flüssigkristallmedium eine Komponente C enthält.

7. Bauteil oder Bauelement nach einem der Ansprüche 4 und 5, **dadurch gekennzeichnet, dass** das Flüssigkristallmedium eine Komponente D enthält.

8. Verwendung eines Flüssigkristallmediums, das

- eine Komponente A, die aus einer oder mehreren Verbindungen der in Anspruch 1 angegebenen Formel I besteht und
- zusätzlich eine oder Komponenten ausgewählt aus der Gruppe der folgenden Komponenten, Komponenten B bis E:

  - einer stark dielektrisch positiven Komponente, Komponenten B, die eine dielektrische Anisotropie von 10 oder mehr aufweist,
  - einer stark dielektrisch negativen Komponente, Komponente C, die eine dielektrische Anisotropie mit einem Betrag von 5 oder mehr aufweist,
  - einer Komponente, Komponente D, die eine dielektrische Anisotropie im Bereich von mehr als -5,0 und von weniger als 10,0 aufweist und aus Verbindungen mit acht oder mehr fünf- oder sechsgliedrigen Ringen besteht und
  - einer Komponente, Komponente E, die ebenfalls eine dielektrische Anisotropie im Bereich von mehr als -5,0 und von weniger als 10,0 aufweist und aus Verbindungen mit bis zu sieben fünf- oder sechsgliedrigen Ringen besteht,

enthält, in einem Bauteil oder in einem Bauelement nach Anspruch 1.

9. Verwendung eines Flüssigkristallmediums, das

- eine Komponente A, die aus einer oder mehreren Verbindungen der in Anspruch 1 angegebenen Formel I besteht und
- eine Komponenten B, die eine dielektrische Anisotropie von 10 oder mehr aufweist,

enthält, in einem Bauteil oder in einem Bauelement nach Anspruch 1.

10. Verwendung eines Flüssigkristallmediums, das

- eine Komponente A, die aus einer oder mehreren Verbindungen der in Anspruch 1 angegebenen Formel I besteht und
- eine stark dielektrisch negative Komponente, Komponente C, die eine dielektrische Anisotropie Anisotropie mit einem Betrag von 5 oder mehr aufweist,

enthält, in einem Bauteil oder in einem Bauelement nach Anspruch 1.

11. Verwendung eines Flüssigkristallmediums, das

- eine Komponente A, die aus einer oder mehreren Verbindungen der in Anspruch 1 angegebenen Formel I besteht und
- eine Komponente D, die eine dielektrische Anisotropie im Bereich von mehr als -5,0 und von weniger als 10,0 aufweist und aus Verbindungen mit acht oder mehr fünf- oder sechsgliedrigen Ringen besteht,

enthält, in einem Bauteil oder in einem Bauelement nach Anspruch 1.

**12.** Verwendung eines Flüssigkristallmediums, das

- eine Komponente A, die aus einer oder mehreren Verbindungen der in Anspruch 1 angegebenen Formel I besteht und
- eine Komponente, Komponente E, die eine dielektrische Anisotropie im Bereich von mehr als -5,0 und von weniger als 10,0 aufweist und aus Verbindungen mit bis zu sieben fünf- oder sechsgliedrigen Ringen besteht,

enthält, in einem Bauteil oder in einem Bauelement nach Anspruch 1.

**13.** Verfahren zur Herstellung eines Bauteils oder Bauelements nach einem oder mehreren der Ansprüche 1 bis 7, **dadurch gekennzeichnet, dass** ein Flüssigkristallmedium verwendet wird.

**14.** Mikrowellenantennenarray, **dadurch gekennzeichnet, dass** es ein oder mehrere Bauteile oder Bauelemente nach einem oder mehreren der Ansprüche 1 bis 7 enthält.

**15.** Verfahren zum Abstimmen eines Mikrowellenantennenarrays, **dadurch gekennzeichnet, dass** ein Bauteil oder ein Bauelement nach einem oder mehreren der Ansprüche 1 bis 7 elektrisch angesteuert wird.

## Claims

**1.** Component for high-frequency technology or for the microwave range and millimetre wave range of the electromagnetic spectrum selected from the group of the following components: wireless and radio wave antenna arrays and microwave antenna arrays, or device for high-frequency technology or for the microwave range and millimetre wave range of the electromagnetic spectrum selected from the group of the following devices: phase shifters, varactors and matching circuit adaptive filters, **characterised in that** it contains a liquid-crystal compound of the formula I or a liquid-crystal medium which itself comprises one or more compounds of the formula I,

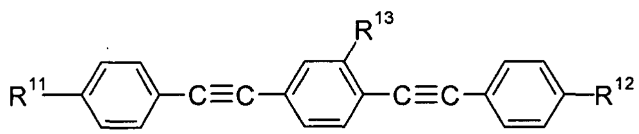

I

in which

$R^{11}$ to $R^{13}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cyclo-alkyl, alkylcycloalkyl, cycloalkenyl, alkylcycloalkenyl, alkyl-cycloalkylalkyl or alkylcycloalkenylalkyl, each having up to 15 C atoms.

**2.** Component or device according to Claim 1, **characterised in that** it contains a liquid-crystal compound.

**3.** Component or device according to Claim 1, **characterised in that** it contains a liquid-crystal medium.

**4.** Component or device according to Claim 3, **characterised in that**, besides a component A which consists of one or more compounds of the formula I given in Claim 1, the liquid-crystal medium additionally comprises one or more components selected from the group of the following components, components B to E,

- a strongly dielectrically positive component, component B, which has a dielectric anisotropy of 10 or more,
- a strongly dielectrically negative component, component C, which has a dielectric anisotropy having a numerical value of 5 or more,
- a component, component D, which has a dielectric anisotropy in the range from more than -5.0 to less than 10.0 and consists of compounds having eight or more five- or six-membered rings, and
- a component, component E, which likewise has a dielectric anisotropy in the range from more than -5.0 to less than 10.0 and consists of compounds having up to seven five- or six-membered rings.

5. Component or device according to Claim 4, **characterised in that** the liquid-crystal medium comprises a component B.

6. Component or device according to Claim 4, **characterised in that** the liquid-crystal medium comprises a component C.

7. Component or device according to one of Claims 4 and 5, **characterised in that** the liquid-crystal medium comprises a component D.

8. Use of a liquid-crystal medium which comprises

- a component A which consists of one or more compounds of the formula I indicated in Claim 1 and
- additionally one or more components selected from the group of the following components, components B to E:

  - a strongly dielectrically positive component, component B, which has a dielectric anisotropy of 10 or more,
  - a strongly dielectrically negative component, component C, which has a dielectric anisotropy having a numerical value of 5 or more,
  - a component, component D, which has a dielectric anisotropy in the range from more than -5.0 to less than 10.0 and consists of compounds having eight or more five- or six-membered rings, and
  - a component, component E, which likewise has a dielectric anisotropy in the range from more than -5.0 to less than 10.0 and consists of compounds having up to seven five- or six-membered rings,

in a component or device according to Claim 1.

9. Use of a liquid-crystal medium which comprises

- a component A which consists of one or more compounds of the formula I indicated in Claim 1 and
- a component B which has a dielectric anisotropy of 10 or more,

in a component or device according to Claim 1.

10. Use of a liquid-crystal medium which comprises

- a component A which consists of one or more compounds of the formula I indicated in Claim 1 and
- a strongly dielectrically negative component, component C, which has a dielectric anisotropy having a numerical value of 5 or more,

in a component or device according to Claim 1.

11. Use of a liquid-crystal medium which comprises

- a component A which consists of one or more compounds of the formula I indicated in Claim 1 and
- a component D which has a dielectric anisotropy in the range from more than -5.0 to less than 10.0 and consists of compounds having eight or more five- or six-membered rings,

in a component or device according to Claim 1.

12. Use of a liquid-crystal medium which comprises

- a component A which consists of one or more compounds of the formula I indicated in Claim 1 and
- a component, component E, which has a dielectric anisotropy in the range from more than -5.0 to less than 10.0 and consists of compounds having up to seven five- or six-membered rings,

in a component or device according to Claim 1.

13. Process for the production of a component or device according to one or more of Claims 1 to 7, **characterised in that** a liquid-crystal medium is used.

14. Microwave antenna array, **characterised in that** it comprises one or more components or devices according to one or more of Claims 1 to 7.

15. Method for tuning a microwave antenna array, **characterised in that** a component or device according to one or more of Claims 1 to 7 is electrically activated.

## Revendications

1. Composant pour une technologie hautes fréquences ou pour la plage des hyperfréquences et la plage des ondes millimétriques du spectre électromagnétique choisi parmi le groupe des composants qui suivent : antennes réseau sans fil et à ondes radio et antennes réseau hyperfréquences, ou dispositif pour une technologie hautes fréquences ou pour la plage hyperfréquences et la plage des ondes millimétriques du spectre électromagnétique choisi parmi le groupe des dispositifs qui suivent : déphaseurs, varacteurs et filtres adaptatifs de circuit d'adaptation, **caractérisé en ce qu'**il contient un composé de cristaux liquides de la formule I ou un milieu cristallin liquide qui comprend lui-même un ou plusieurs composés de la formule I,

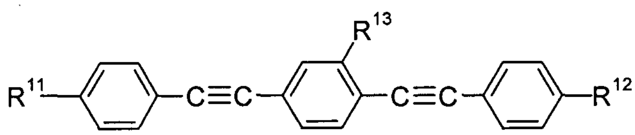

I

dans laquelle

$R^{11}$ à $R^{13}$ représentent, indépendamment l'un de l'autre, alkyle non fluoré ou alcoxy non fluoré, chacun comportant de 1 à 15 atomes de C, alkényle non fluoré, alkényloxy non fluoré ou alcoxyalkyle non fluoré, chacun comportant de 2 à 15 atomes de C, ou cycloalkyle, alkylcycloalkyle, cyclo-alkényle, alkylcycloalkényle, alkylcycloalkylalkyle ou alkyl-cycloalkénylalkyle, chacun comportant jusqu'à 15 atomes de C.

2. Composant ou dispositif selon la revendication 1, **caractérisé en ce qu'**il contient un composé de cristaux liquides.

3. Composant ou dispositif selon la revendication 1, **caractérisé en ce qu'**il contient un milieu cristallin liquide.

4. Composant ou dispositif selon la revendication 3, **caractérisé en ce que**, en plus d'un composant A qui est constitué par un ou plusieurs composés de la formule I donnée selon la revendication 1, le milieu cristallin liquide comprend additionnellement un ou plusieurs composants choisis parmi le groupe des composants qui suivent, à savoir les composants B à E,

   - un composant fortement diélectriquement positif, soit le composant B, lequel présente une anisotropie diélectrique de 10 ou plus,
   - un composant fortement diélectriquement négatif, soit le composant C, lequel présente une anisotropie diélectrique présentant une valeur numérique de 5 ou plus,
   - un composant, soit le composant D, lequel présente une anisotropie diélectrique dans la plage qui va de plus de -5,0 à moins de 10,0 et est constitué par des composés comportant huit cycles ou plus de cinq ou six éléments, et
   - un composant, soit le composant E, lequel présente pareillement une anisotropie diélectrique dans la plage qui va de plus de -5,0 à moins de 10,0 et est constitué par des composés comportant jusqu'à sept cycles de cinq ou six éléments.

5. Composant ou dispositif selon la revendication 4, **caractérisé en ce que** le milieu cristallin liquide comprend un composant B.

6. Composant ou dispositif selon la revendication 4, **caractérisé en ce que** le milieu cristallin liquide comprend un composant C.

7. Composant ou dispositif selon une ou plusieurs des revendications 4 et 5, **caractérisé en ce que** le milieu cristallin liquide comprend un composant D.

**8.** Utilisation d'un milieu cristallin liquide, lequel comprend :

- un composant A qui est constitué par un ou plusieurs composés de la formule I indiquée selon la revendication 1 et
- additionnellement, un ou plusieurs composants choisis parmi le groupe des composants qui suivent, à savoir les composants B à E :
  - un composant fortement diélectriquement positif, soit le composant B, lequel présente une anisotropie diélectrique de 10 ou plus,
  - un composant fortement diélectriquement négatif, soit le composant C, lequel présente une anisotropie diélectrique d'une valeur numérique de 5 ou plus,
  - un composant, soit le composant D, lequel présente une anisotropie diélectrique dans la plage qui va de plus de -5,0 à moins de 10,0 et est constitué par des composés comportant huit cycles ou plus à cinq ou six éléments, et
  - un composant, soit le composant E, lequel présente pareillement une anisotropie diélectrique dans la plage qui va de plus de -5,0 à moins de 10,0 et est constitué par des composés comportant jusqu'à sept cycles à cinq ou six éléments,

dans un composant ou dispositif selon la revendication 1.

**9.** Utilisation d'un milieu cristallin liquide, lequel comprend :

- un composant A, lequel est constitué par un ou plusieurs composés de la formule I indiquée selon la revendication 1 et
- un composant B, lequel présente une anisotropie diélectrique de 10 ou plus,

dans un composant ou dispositif selon la revendication 1.

**10.** Utilisation d'un milieu cristallin liquide, lequel comprend :

- un composant A, lequel est constitué par un ou plusieurs composés de la formule I indiquée selon la revendication 1 et
- un composant fortement diélectriquement négatif, soit le composant C, lequel présente une anisotropie diélectrique d'une valeur numérique de 5 ou plus,

dans un composant ou dispositif selon la revendication 1.

**11.** Utilisation d'un milieu cristallin liquide, lequel comprend :

- un composant A, lequel est constitué par un ou plusieurs composés de la formule I indiquée selon la revendication 1 et
- un composant D, lequel présente une anisotropie diélectrique dans la plage qui va de plus de -5,0 à moins de 10,0 et est constitué par des composés comportant huit cycles ou plus à cinq ou six éléments,

dans un composant ou dispositif selon la revendication 1.

**12.** Utilisation d'un milieu cristallin liquide, lequel comprend :

- un composant A, lequel est constitué par un ou plusieurs composés de la formule I indiquée selon la revendication 1 et
- un composant, soit le composant E, lequel présente une anisotropie diélectrique dans la plage qui va de plus de -5,0 à moins de 10,0 et est constitué par des composés comportant jusqu'à sept cycles à cinq ou six éléments,

dans un composant ou dispositif selon la revendication 1.

**13.** Procédé pour la production d'un composant ou dispositif selon une ou plusieurs des revendications 1 à 7, **caractérisé en ce qu'**un milieu cristallin liquide est utilisé.

**14.** Antenne réseau hyperfréquences, **caractérisée en ce qu'**elle comprend un ou plusieurs composants ou dispositifs selon une ou plusieurs des revendications 1 à 7.

**15.** Procédé pour accorder une antenne réseau hyperfréquences, **caractérisé en ce qu'**un composant ou dispositif selon une ou plusieurs des revendications 1 à 7 est activé électriquement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102004029429 A
- JP 2005120208 A
- DE 10120024 A1
- DE 19907941 A1
- US 5759443 A

### In der Beschreibung aufgeführte Nicht-Patentliteratur

- **Z.B. WU, S.-T. ; HSU, C.-S. ; SHYU, K.-F.** *Appl. Phys. Lett.,* 1999, vol. 74 (3), 344-346
- **HSU, C. S. ; SHYU, K. F. ; CHUANG, Y. Y. ; WU, S.-T.** *Liq. Cryst.,* 2000, vol. 27 (2), 283-287
- **DABROWSKI, R. ; KULA, P. ; GAUZA, S. ; DZIADISZEK, J. ; URBAN, S. ; WU, S.-T.** *IDRC,* 2008, vol. 08, 35-38
- **A. GAEBLER ; A. MOESSINGER ; F. GOELDEN et al.** Liquid Crystal-Reconfigurable Antenna Concepts for Space Applications at Microwave and Millimeter Waves. *International Journal of Antennas and Propagation,* 2009, vol. 2009 (876989), 1-7
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35 GHz. *34th European Microwave Conference - Amsterdam,* 545-548
- Direct Simulation of Material Permittivites using an Eigen-Susceptibility Formulation of the Vector Variational Approach. **A. GAEBLER ; F. GOELDEN ; S. MÜLLER ; A. PENIRSCHKE ; R. JAKOBY.** 12MTC 2009 - International Instrumentation and Measurement Technology Conference, Singapur. IEEE, 2009, 463-467
- **ZHENGLIN ZHANGA et al.** Synthesis and properties of highly birefringent liquid crystalline materials: 2,5 bis (5-alkyl-2-butadünylthiophene-yl) styrene monomers. *Liquid Crystals,* 2010, vol. 37 (1), 69-76
- **TSAI, W.-L. et al.** Mesogenic properties of Cycloalkylmethyl 4-(4'-octoxybiphenyl-4-carbonyloxy)benzoate. *Liquid Crystals,* 2004, vol. 31 (2), 299-300
- Merck Liquid Crystals, Physical Properties of Liquid Crystals. Stand. Merck KGaA, November 1997
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35GHz. *34th European Microwave Conference - Amsterdam,* 545-548
- **A. GAEBLER ; F. GÖLDEN ; S. MÜLLER ; A. PENIRSCHKE ; R. JAKOBY.** Direct Simulation of Material Permittivites ... *12MTC 2009 - International Instrumentation and Measurement Technology Conference, Singapur,* 2009, 463-467
- **HSU, C. S. ; SHYU, K. F. ; CHUANG, Y. Y. ; WU, S.-T.** *Liq. Cryst.,* 2000, vol. 27 (2), 283-287